# EUROPÄISCHE PATENTSCHRIFT

(11) **EP 2 999 973 B1**
(45) Veröffentlichungstag und Bekanntmachung des Hinweises auf die Patenterteilung: **14.06.2017**
(21) Anmeldenummer: 14725690.3
(22) Anmeldetag: 21.05.2014
(51) Int. Cl.: G01S 5/02, G01S 5/16, G01S 1/68, G01C 21/16, G01C 21/20

(54) **MOBILES TRAGBARES GERÄT UND POSITIONSBESTIMMUNG**
MOBILE PORTABLE DEVICE AND POSITION DETERMINATION
APPAREIL MOBILE PORTABLE ET DÉTERMINATION DE POSITION

(30) Priorität: 22.05.2013 DE 102013209462
(43) Veröffentlichungstag der Anmeldung: 30.03.2016
(73) Patentinhaber: Fraunhofer Portugal Research, 4200-135 Porto (PT)
(72) Erfinder: ELIAS, Dirk, P-4450-171 Matosinhos (PT)
(74) Vertreter: Schenk, Markus
(86) Internationale Anmeldenummer: PCT/EP2014/060417
(87) Internationale Veröffentlichungsnummer: WO 2014/187850

(56) Entgegenhaltungen:
- EP-A2- 1 022 578
- US-A1- 2006 125 644
- US-A1- 2013 028 609
- US-A1- 2013 029 685
- US-A1- 2013 053 056

## Beschreibung

Die vorliegende Erfindung bezieht sich auf ein mobiles, tragbares Gerät, wie z.B. ein mobiles, tragbares Kommunikationsgerät, und auf ein Konzept zur Bestimmung der Position eines solchen.

Derzeit sind im Stand der Technik eine Vielzahl von Positionserkennungs- bzw. Lokalisierungssysteme bekannt. Die zahlenmäßig wohl gebräuchlichsten Systeme basieren auf Satelliten-gestützten Verfahren, die jedoch zwangsweise den Empfang von Satellitenfunksignalen benötigen und daher besonders im Innenbereich von Gebäuden meist nicht oder nur eingeschränkt nutzbar sind. Positionserkennungssysteme für den Einsatz im Innenbereich von Gebäuden basieren oft auf Methoden, die Feldstärkemessungen von Funksignalen benötigen, wie z.B. GSM, Wi-Fi, Bluetooth oder Ähnlichem. Gegebenenfalls wird dabei auch die zelluläre Struktur einer solchen Anordnung von Funkknoten in einem Netzwerk zu einer Groblokalisierung herangezogen. Eine solche Vorgehensweise erfordert häufig Investitionen, die in einem ungünstigen Verhältnis zu ihrem Nutzen stehen. Auch sind diese Systeme oft relativ ungenau und ermöglichen beispielsweise nicht die Differenzierung, ob eine Position vor oder hinter einem Hindernis (Wand, Tür, Schranke, Grenzlinie, etc.) eingenommen wurde.

Andere Positionierungssysteme für den Innenbereich arbeiten mit Baken (basierend auf beispielsweise Infrarot, Funk und/oder Magnetismus, die an vorbekannten Orten aufgestellt sind und - insbesondere durch die begrenzte Reichweite der von ihnen ausgesandten Signale - so einzelne Orte bzw. deren Umgebungsbereiche identifizierbar machen. Allerdings ist lediglich eine Positionsbestimmung an diesen Orten und deren - durch die begrenzte Reichweite definierten - Umgebungsbereiche möglich. Eine weitere Art der lokalen Positionsbestimmung arbeitet mit Sensoren, die die Bewegung eines Körpers, d.h. eines Menschen oder eines Gegenstandes, erfassen und so dessen Position relativ zu einem Referenzort berechnen können. Diese Systeme werden jedoch nach relativ kurzer Missionsdauer zunehmend ungenau, denn mit zunehmender Zeit und/oder Anzahl der erfassten Bewegungen wirken sich beispielsweise Drifterscheinungen aus, so dass die Ungenauigkeit der Berechnung für einen praktischen Einsatz zu groß wird.

Die US 2006/0125644 A1 beschreibt unter anderem ein Innenraumlokalisierungsgerät zum Lokalisieren eines Menschen oder eines Tiers, wobei das Gerät einen Trägheitssensor und eine Schnittstelle zu Funkortungsbasisstationssignalen aufweist. Auf der Basis der Trägheitsdaten wird das Gerät lokalisiert durch Zählen der Anzahl von Schritten und Messen der Bewegungsrichtung unter Verwendung eines Kompasses. Auf regelmäßiger Basis wird eine Koppelnavigationsposition aktualisiert. Insbesondere werden jedes Mal, wenn die Person, die das Gerät trägt, sich in der Nähe einer Funkortung befindet, Zeitbereichsdaten und/oder Signalstärkedaten verwendet, um das Gerät zu lokalisieren. Zwischen den Funkortungen wird eine Schätzung der Position als eine Funktion der Zeit auf der Basis der Trägheitsdaten bestimmt. An den Funkortungen wird diese Position regelmäßig korrigiert, womit verhindert wird, dass sich die Fehler beim Lokalisieren der Position unter Verwendung der Trägheitsdaten im Verlauf der Zeit erhöhen. Zusätzlich wird "Kartenabgleich" verwendet, um die Genauigkeit der Positionsbestimmung zu erhöhen. Insbesondere werden Kontrollpunkte in einer Karte wie z. B. 90°- und 180°-Drehungen, Stufen, Beschränkungspunkte usw. in dem Weg identifiziert und mit den bekannten Positionen dieser Kontrollpunkte in der Karte verglichen, um zu der regelmäßigen Korrektur der bestimmten Position beizutragen. Zusätzlich wird weitere Verbesserung des Ortungssystems erreicht, indem das System Aktivität und Richtung sowie die Position des Geräts misst. Durch diese Maßnahme können Aktivitäten der Person, die das Gerät trägt, erfasst werden und können verwendet werden, um auf die Position der Person zuzugreifen. Eine Schrittlänge wird basierend auf der Anzahl von Schritten bestimmt, die zwischen zwei bekannten Positionen gemacht werden. Eine gemischte Anwendung für den Innen- und Außenraum wird beschrieben. Hier werden GPS-Daten und das Funkortungssystem im Außen- als auch Innenraum verwendet.

In der US 20130029685 A1 wird ein Verfahren und System beschrieben, wo eine Mehrzahl von Positionsreferenzgeräten Nahbereich-Drahtloskommunikationsprotokolle verwenden, um Positionsunterstützungsdaten an nahe Mobilgeräte zu übertragen, und die Mobilgeräte verwenden die Unterstützungsdaten, um Fehler zu modellieren und ihre Positionierungssysteme neu zu kalibrieren. Die Nahbereich-Kommunikationsverfahren umfassen NFC, RFID, Bluetooth^{®}, Nahbereich 802.11, Wi-Fi Direct und hochfrequente fokussierte Strahlen wie z. B. 60 GHz. Die Positionsreferenzgeräte sind passive oder aktive NFC-Kennungen, passive oder aktive RFID-Kennungen, andere Geräte, die solche Kennungen als Komponenten aufweisen, Bluetooth^{®}-aktivierte Geräte, 60 GHz aktivierte Geräte und 802.11 Zugriffspunkte, die ihre Übertragungsleistung verringern können. Die Referenzgeräte sind an verschiedenen Stellen im Innen- und Außenraum angeordnet, wie z. B. Smartposter, Kioske, Geldautomaten, Einkaufszentren, Ladenkassen, Ladensicherheitstoren, Drahtloszugriffspunkten, Mobilfunkbasisstationen, Mautstellen, Ampeln und Straßenlaternenpfählen.

Die Aufgabe der vorliegenden Erfindung besteht deshalb darin, ein mobiles tragbares Gerät und ein Konzept zur Bestimmung von dessen Position zu schaffen, so dass der Realisierungsaufwand bei vergleichbarer Positionierungsgenauigkeit verringert oder umgekehrt bei vergleichbarem Realisierungsaufwand die Positionierungsgenauigkeit erhöht werden kann.

Diese Aufgabe wird durch den Gegenstand der beigefügten unabhängigen Patentansprüche erzielt.

Eine Erkenntnis, auf der die vorliegende Anmeldung basiert, besteht darin, erkannt zu haben, dass das Verhältnis zwischen Realisierungsaufwand auf der einen und Positionierungsgenauigkeit auf der anderen Seite verbessert werden kann, wenn zur Bestimmung der Position eines mobilen tragbaren Gerätes in dem Gerät zwei Sensoren verwendet werden, nämlich ein Sensor zur Detektion der Bewegung des mobilen tragbaren Gerätes sowie ein Sensor zur Erkennung der Annäherung des mobilen tragbaren Geräts an eine oder mehrere Referenzbaken, wobei aus einer Kenntnis einer Position der einen oder mehreren Referenzbaken über die von dem die Bewegung detektierenden Sensor bereitgestellten Daten die Position des mobilen tragbaren Geräts relativ zu der einen oder mehreren Referenzbaken berechnet wird. Das Bereitstellen einer Infrastruktur aus Referenzbaken ist mit wenig Aufwand möglich und erlaubt dennoch eine relativ hohe Genauigkeit der Lokalisierung mittels des Annäherungssensors des mobilen tragbaren Geräts, da die Baken lediglich der sporadischen Berechnungskorrektur der aus dem die Bewegung erfassenden Sensor dienen und eine Flächenabdeckung bzw. Dichte der einen oder mehreren Referenzbaken gering gehalten werden kann, indem zwischen dem Passieren der einen oder mehreren Referenzbaken durch das mobile tragbare Gerät der Sensor zur Detektion der Bewegung des mobilen tragbaren Geräts ausgenutzt wird.

Vorteilhafte Implementierungen sind Gegenstand der abhängigen Patentansprüche.

Bevorzugte Ausführungsbeispiele der vorliegenden Anmeldung werden nachfolgend Bezug nehmend auf die Zeichnungen näher erläutert. Es zeigen:
- Fig. 1: ein schematisches Blockschaltbild eines mobilen tragbaren Geräts 10 sowie eine Einbindung desselben in ein System zu dessen Positionsbestimmung gemäß einem Ausführungsbeispiel;
- Fig. 2: ein schematisches Blockschaltbild eines mobilen tragbaren Geräts in Form eines mobilen tragbaren Kommunikationsgeräts gemäß einem Ausführungsbeispiel;
- Fig. 3: eine schematische Darstellung der Möglichkeit einer Groblokalisierung des mobilen tragbaren Geräts mittels eines Kommunikationsnetzes gemäß einem Ausführungsbeispiel;
- Fig. 4: eine schematische Darstellung der Verwendung einer Groblokalisierung gemäß Fig. 3 zur Unterstützung der Unterscheidbarkeit bzw. Identifizierung unter verteilt angeordneten Referenzbaken gemäß einem Ausführungsbeispiel;
- Fig. 5: eine schematische Darstellung der Verwendung von geographischen Gegebenheiten zur Unterstützung der Positionsberechnung auf Basis des Bewegungssensors gemäß einem Ausführungsbeispiel;
- Fig. 6: eine schematische Darstellung der Eigenschaft der Positionsbestimmung auf Basis des Bewegungssensors zwischen dem Passieren zweier Referenzbaken zur Veranschaulichung der zunehmenden Ungenauigkeit der berechneten Position gemäß einem Ausführungsbeispiel;
- Fig. 7: ein schematisches Blockschaltbild eines im Vergleich zu Fig. 1 dahin gehend modifizierten Systems, dass die Positionsbestimmung auf Basis von Bewegungs- und Annäherungssensor extern durchgeführt wird, gemäß einem Ausführungsbeispiel;
- Fig. 8a: und 8b schematische Darstellungen von magnetischen Referenzbaken, die zusätzlich zur Positionsbestimmung eine Bestimmung der Richtung des Passierens der jeweiligen Referenzbake ermöglichen.

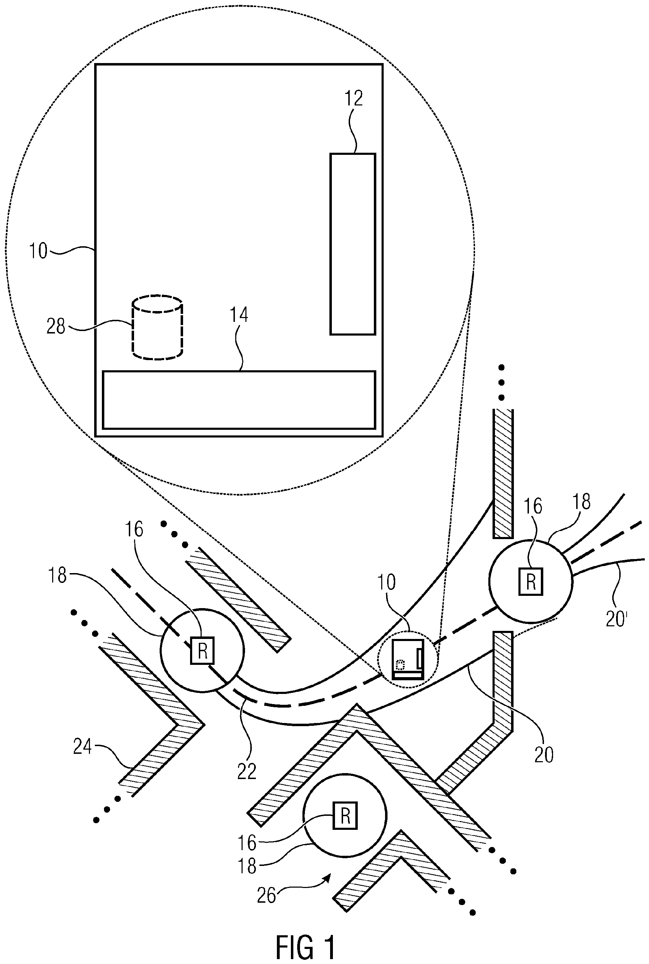

Fig. 1 zeigt ein mobiles tragbares Gerät 10 gemäß einem Ausführungsbeispiel der vorliegenden Anmeldung sowie ein Beispiel einer dasselbe umgebenden Umgebung mit einem Infrastruktursystem aus Referenzbaken, um daran das Konzept zur Bestimmung der Position des mobilen tragbaren Geräts 10 zu veranschaulichen. Gerät 10 und Referenzbaken zusammen können auch zusammen als System zur Positionsbestimmung angesehen werden.

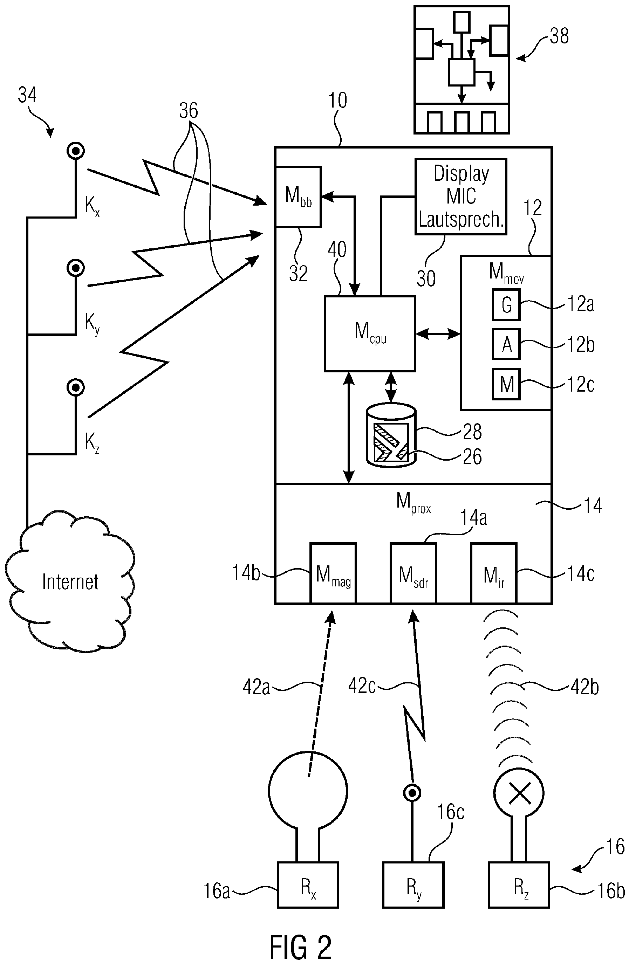

Das mobile tragbare Gerät 10 ist beispielsweise ein mobiles tragbares Kommunikationsgerät, für das in Fig. 2 später ein detaillierteres Ausführungsbeispiel beschrieben wird. Im Grunde genommen kann es sich bei dem Gerät 10 um jedwedes mobiles tragbares Gerät handeln, wie z.B. ein Mobiltelefon, ein PDA, einen Multimediaplayer oder dergleichen.

Das mobile tragbare Gerät ist ausgestattet mit einem oder mehreren Sensoren 12 zur Detektion einer Bewegung des mobilen tragbaren Geräts 10 und einem oder mehreren Sensoren 14 zur Erkennung der Annäherung des mobilen tragbaren Geräts 10 an eine oder mehrere Referenzbaken 16, die in einer Umgebung des Geräts 10 verteilt angeordnet sind und quasi ein Infrastruktursystem bereitstellen, das, wie es im Folgenden noch beschrieben wird, zur Bestimmung der Position des Geräts 10 beiträgt bzw. von dem Gerät dazu ausgenutzt wird. Im Folgenden wird häufig vereinfachend nur von einem Sensor 12 und einem Sensor 14 ausgegangen, aber die Möglichkeit, dass zwei oder mehr Sensoren des Typs 12 und/oder zwei oder mehr Sensoren des Typs 14 beteiligt sind, soll dadurch nicht ausgeschlossen sein.

Wie es noch im Folgenden näher erläutert wird, ist das mobile tragbare Gerät 10 ausgebildet, unter Ausnutzung einer Kenntnis einer Position der einen oder mehreren Referenzbaken 16 über die von dem Sensor 12 bereitgestellten Daten die Position des mobilen tragbaren Geräts 10 relativ zu der einen oder mehreren Referenzbaken 16 zu berechnen. Die Berechnung in dem Gerät 10 wird beispielsweise durch eine Verarbeitungseinheit des Geräts 10 durchgeführt, wie es später anhand von Figur 2 exemplarisch veranschaulicht wird.

In der nachfolgenden Beschreibung werden die einzelnen Komponenten des Geräts 10 sowie das Zusammenspiel derselben zur Bestimmung der Position des Geräts 10 noch näher beschrieben, aber bereits vorab soll Bezug nehmend auf Fig. 1 das Konzept zur Positionsbestimmung schon einmal kurz veranschaulicht werden, um das Verständnis der nachfolgenden detaillierteren Erörterung zu vereinfachen.

Die Positionsbestimmung des Geräts 10 von Fig. 1 basiert auf einer Kombination der Ausnutzung der Positionsbestimmungsfähigkeiten, wie sie durch die Sensoren 12 und 14 bereitgestellt werden. Vorteilhaft ist, dass sich Sensoren 12 und 14 zumeist bereits sowieso schon in neueren mobilen Geräten befinden. Der Sensor 12 ist beispielsweise als Lage- und/oder Beschleunigungssensor ausgeführt und umfasst beispielsweise ein oder mehrere Gyroskope und/oder einen oder mehrere Beschleunigungsmesser bzw. Accelerometer und optional zusätzlich einen oder mehrere Magnetometer. Auf diese Weise ist es möglich, aus den Daten des Sensors 12 Beschleunigungen des mobilen tragbaren Geräts 10 in einem Koordinatensystem zu bestimmen, das beispielsweise ausgerichtet ist zu dem Gravitationsfeld bzw. der Vertikalen und optional zusätzlich zu den Himmelsrichtungen. Auf diese Weise wiederum ist es möglich, dass das Gerät 10 Relativbewegungen des mobilen tragbaren Geräts 10 zu seiner jeweils aktuellen Position erkennt. Insbesondere kann das Gerät 10 über den Sensor die Lokomotion des Trägers des mobilen tragbaren Geräts 10 erkennen, wie z.B. der betreffenden Person, die das Gerät 10 beispielsweise in der Hand, in der Kleidung oder in einer Tasche trägt. Beispielsweise wertet das Gerät 10 zyklische Muster in den Signalen des Sensors 12 aus, die aus Bewegungsabläufen in der Lokomotion des Trägers des Geräts 10 resultieren, um beispielsweise einzelne Schritte zu erkennen und diesen Schritten jeweils eine Schrittweite und eine Richtungsänderung zuzuordnen, um auf diese Weise durch Aneinanderfügen der erkannten Schrittweiten und Richtungen die aktuelle Position des Geräts 10 zu verfolgen bzw. zu tracken, und zwar relativ zu einer zu Beginn der Berechnung vorliegenden Referenzposition, die, wie es nachfolgend dargelegt wird, vorliegend auf Basis der Referenzbaken erhalten wird.

Das Positionsbestimmungskonzept beruht aber nicht nur auf einer Auswertung des Signals von dem Sensor 12. Die darauf beruhende Positionsbestimmung ist aufgrund der schrittweisen relativen Lokomotionsänderung einer Fehlerfortpflanzung unterzogen, aufgrund der sich die Ungenauigkeit der Positionsbestimmung aufgrund des Sensors 12 monoton erhöht. Vielmehr wird zusätzlich der Sensor 14 zur Positionsbestimmung herangezogen.

Gemäß den nachfolgend beschriebenen Ausführungsbeispielen handelt es sich bei den Referenzbaken 16 um solche, die jeweils ein Signal mit einer endlichen Reichweite aussenden, so dass das jeweilige Signal lediglich in einem Umgebungsbereich 18 um die jeweilige Referenzbake 16 herum durch den Sensor 14 detektierbar ist. Auf diese Weise ist zumindest innerhalb der Bereiche 18 die Position des Geräts 10 durch den Sensor 14 zumindest in einer Genauigkeit bestimmbar, die der Weite der Umgebungsbereiche 18 entspricht. In anderen Worten ausgedrückt, erkennt beispielsweise das Gerät 10 die Anwesenheit des Geräts 10 in einem Umgebungsbereich 18 daran, dass der Sensor 14 das Signal der jeweiligen Referenzbake 16 detektiert. Wie es in den nachfolgenden Ausführungsbeispielen noch erläutert wird, kann es möglich sein, dass das Gerät 10 bei dem Passieren einer Referenzbake 16 durch das Gerät 10 zusätzlich zu einer Position des Geräts 10 aus diesem Passieren auch eine Lokomotionsrichtung des Trägers des Geräts 10 erkennt, d.h. eine Information darüber ableitet, in welche Richtung das Gerät 10 den jeweiligen Umgebungsbereich 16 passiert.

Wie es im Folgenden noch näher veranschaulicht wird, kann es sich bei dem Signal einer Referenzbake 16 um ein magnetisches Signal handeln oder um ein Lichtsignal oder um beispielsweise ein nieder-bitratiges Kurzstrecken-Übertragungssignal bzw. ein kurzreichweitiges Funksignal. Referenzbaken 16 mit Magnetsignalen haben Vorteile in Bezug auf die relativ saubere Begrenztheit des Umgebungsbereiches 18. Das heißt, die Stärke des Magnetsignals einer solchen Referenzbake 16 fällt außerhalb des Umgebungsbereichs 18 sehr schnell ab, um damit auf eine sehr definiert Art und Weise eine Detektionsschwelle des Sensors 14 zu unterschreiten. Nähere Details hierzu sind in der DE 102010043394 A1 beschrieben. Es sei aber darauf hingewiesen, dass es prinzipiell auch möglich wäre, dass es sich bei einer Referenzbake 16 um ein passives Bauteil handelt, wobei das Gerät 10 beispielsweise zusätzlich zu dem Sensor 14 einen Signalgenerator aufweist, dessen Signal beispielsweise durch die jeweilige Referenzbake 16 zurückgeworfen und durch den Sensor 14 erkannt wird. Auch ein passives Erkennen ohne Signalausstrahlung wäre theoretisch möglich: eine Kamera 14 als Sensor 14 mit zugehöriger Musterkennung zur Erkennung des Vorhandenseins einer Referenzbake in dem Gesichtsfeld der Kamera könnte zur Annäherungserkennung verwendet werden. Dennoch wird bevorzugt, wenn es sich bei dem zweiten Sensor 14 beispielsweise um einen Magnetfeldsensor und/oder einen lichtempfindlichen Sensor und/oder eine nieder-bitratige Kurzstrecken-Übertragungsschnittstelle handelt, also einen Sensor zu Erkennung eines von der Bake ausgesendeten Signals.

Wie es nun schon beschrieben wurde, nutzt das Gerät 10 beide Sensoren 12 und 14 zur Positionsbestimmung. Das ermöglicht Folgendes: Zwischen dem Passieren von Referenzbaken 16 kann die Position des Geräts 10 mittels des Sensors 12 bestimmt werden. Bei dieser Berechnung vergrößert sich mit zunehmendem Abstand von der zuletzt passierten Referenzbake die Ungenauigkeit der Berechnung. In Fig. 1 ist diese zunehmende Ortungsungenauigkeit mit dünnen, durchgezogenen Linien 20 angedeutet, die den tatsächlichen Pfad 22 umgibt, entlang dessen sich das Gerät 10 tatsächlich bewegt, und von Bake zu Bake immer breiter wird. Die Referenzbaken 16 können deshalb so angeordnet sein, dass die Umgebungsbereiche 18 voneinander beabstandet sind, und das zudem die Umgebungsbereich 18 auch recht klein sind und demnach auf einfache Art und Weise eine relativ genaue Positionsbestimmung ermöglichen. Der Abstand kann, wie es nachfolgend noch ausgeführt wird, unter Ausnutzung weiterer durch die Umgebung vorgegebener Bedingungen vergrößert werden. In Fig. 1 ist der Abstand zwischen den Referenzbaken 16 so groß, dass der zwischen zwei Referenzbaken 16 durch die Positionsbestimmung anhand des Sensors 12 zwischen diesen Referenzbaken 16 hinzugefügte Positionierungsfehler größer ist als die Breite des Umgebungsbereichs 18, die ja im Wesentlichen die Genauigkeit widerspiegelt, mit der die Position des Geräts 10 unter Ausnutzung des Sensors 14 bestimmt werden kann. Das Gerät 10 korrigiert nun bei einem Passieren einer Referenzbake 16 die aktuell berechnete Position durch einen Abgleich mit einer bekannten Position der soeben passierten Referenzbake. Woher die Kenntnis der Position der soeben passierten Referenzbake 16 stammt, kann, wie es nachfolgend beschrieben wird, unterschiedlich realisiert sein. Beispielsweise kann eine elektrische Karte mit den Orten der Referenzbaken 16 in dem Gerät 10 selbst gespeichert sein. Eine Aktualisierung von außen über einen Server über eine Drahtlosschnittstelle ist natürlich möglich. Zudem wäre es möglich, dass das Signal der Referenzbake 16 selbst eine Information über den Ort der Referenzbake enthält. Für weitere Alternativen wird auf die nachfolgende Beschreibung verwiesen.

Die Korrektur bei Passieren einer Referenzbake 16, d.h. bei Durchlaufen des Umgebungsbereiches 18 derselben, sieht beispielsweise vor, dass das Gerät 10 die aktuell berechnete Position, die vom Passieren der zuletzt passierten Referenzbake 16 an anhand des Sensors 12 durch ständige Aktualisierung mittels Richtungsänderungen und Schrittweiten oder dergleichen berechnet wurde, so korrigiert, dass sie dem Ort der aktuell passierten Referenzbake 16 gleicht oder einer anderen vorbestimmten Position innerhalb des Umgebungsbereichs 18 der aktuell passierten Referenzbake 16. Zu dem Zeitpunkt dieser Korrektur ist dann die Genauigkeit der Positionsbestimmung 10 vorübergehend sehr genau. Sie entspricht beispielsweise der Weite der Umgebungsbereiche 18. Bis zum Passieren der nächsten Referenzbake 16 verwendet das Gerät 10 dann wieder den Sensor 12, um unter sich mit zunehmendem Abstand von der aktuell passierten Referenzbake vergrößernder Ungenauigkeit die Position des mobilen tragbaren Geräts 10 relativ zu der soeben korrigierten Position zu berechnen. "Relativ zu der soeben korrigierten Position" soll dabei nicht ausschließen, dass die berechneten und korrigierten Positionen in einem absoluten Koordinatensystem angegeben werden, aber die Berechnung anhand des Bewegungssensors 12 geschieht eben auf eine Art und Weise, die lediglich mit laufend detektierten Bewegungsrichtungsänderungen und aktuell zurückgelegten Vor- oder Rückwärtsweiten, wie z.B. Schrittweiten, eine aktuell berechnete Position aktualisiert, d.h. die Positionsbestimmung abhängig bzw. relativ zur vor der Aktualisierung vorliegenden Position durchführt.

Die sich ergebende Ungenauigkeit der Positionsbestimmung nach Fig. 1 wächst also von jeder passierten Referenzbake zur nächsten hin an, um bei jeder Bake 16 erneut auf die durch die durch die Referenzbaken 16 und ihren Umgebungsbereich 18 definierte Ungenauigkeit unmittelbar zusammenzufallen und erneut bis zur nächsten Referenzbake anzuwachsen. Dies ist in Fig. 1 bei der oberen rechten Referenzbake 16 angedeutet, indem die Ungenauigkeit 20' nach der Referenzbake wieder "enger" weitergeht, wobei darauf hingewiesen wird, dass in Fig. 1 der Einfachheit halber die Ungenauigkeit an den Referenzbaken 16 kleiner dargestellt ist als die Weite der Umgebungsbereiche 18, obwohl dies nicht bei jedem Ausführungsbeispiel so sein muss, aber so sein könnte.

Vorteilhafterweise verfolgt bzw. trackt das Gerät 10 mittels der Positionsbestimmung das Gerät 10 in einer elektronischen Karte, die der Umgebung des Geräts 10 entspricht. Fig. 1 zeigt exemplarisch über die Verteilung dreier exemplarisch gezeigter Referenzbaken 16 hinaus noch weitere geographische Gegebenheiten in der Umgebung des Geräts 10, nämlich hier exemplarisch in Form von schraffiert dargestellten Mauern 24, die somit Gänge, Flure, Türen usw. definieren und die Freiheitsgrade einschränken, in welchen sich der Träger des Geräts 10 in der dargestellten Umgebung vernünftigerweise bewegen kann. Gemäß einem Ausführungsbeispiel kann das Gerät 10 bei der Berechnung der Position zwischen dem Passieren der Referenzbaken 16 anhand des Sensors 12 solche geographischen Gegebenheiten 24 in der elektronischen Karte nutzen, um die Genauigkeit durch die geographischen Gegebenheiten 24 durch entsprechenden Einschränkungen der Bewegungsfreiheitsgrade zu reduzieren. Ausgenutzt wird hier, dass üblicherweise beispielsweise ein Träger des Geräts 16 nicht durch Mauern läuft, über Tische geht usw. Weitere Beispiele für solche "geographischen Gegebenheiten" und ihre dadurch bedingten Einschränkungen für die Bewegungsfreiheitsgrade des Trägers des Geräts 10 werden im Folgenden noch geschildert.

Diese eben erwähnte elektronische Karte, von der ein Ausschnitt in Fig. 1 bei 26 veranschaulicht ist, ist beispielsweise in einem optionalen Speicher 28 des Geräts 10 gespeichert.

Wie bereits angekündigt, werden im Folgenden nun weitere Details beschrieben, die einzeln oder zusammen mit der bereits vorhergehenden Beschreibung kombiniert werden können. Diese Details betreffen beispielsweise die Referenzbaken 16 und die unterschiedlichen Möglichkeiten, die Referenzbaken voneinander zu unterscheiden, um die Kenntnis ihres Ortes erlangen zu können. Die Ausführungsbeispiele reichen von "informationslosen Signalen", die weder eine Unterscheidbarkeit ermöglichen noch eine Erlangung der Kenntnis ihrer Position bis hin zu Ausführungsbeispielen, bei denen die Referenzbaken 16 anhand ihrer Signale sowohl eindeutig unterscheidbar sind als auch der jeweilige Ort allein anhand ihres Signals feststellbar ist, indem dieser Ort mit diesem Signal übermittelt wird. Es sei allerdings darauf hingewiesen, dass vorteilhafte Ausführungsbeispiele auch mit lediglich einer Referenzbake 16 auskommen könnten, wodurch die Wunsch nach einer Unterscheidbarkeit obsolet wäre. Die oben beschriebene "Korrektur" würde dann bei jedem Passieren eben jener Referenzbake durchgeführt werden, ebenso wie es ja auch sein kann, dass bei mehreren Baken ein und dieselbe Bake unmittelbar hintereinander zweimal passiert wird. Außerdem werden nachfolgend beschriebene Ausführungsbeispiele auch verdeutlichen, dass die Positionsbestimmung bzw. die Verfolgung des zurückgelegten Weges des Geräts 10 nicht in dem Gerät 10 selbst stattfinden muss. Vielmehr könnte das Gerät 10 zusammen mit der Infrastruktur aus Referenzbaken 16 ein System zur lokalen Positionsbestimmung des mobilen tragbaren Geräts 10 bilden, welches System dann beispielsweise ausgebildet wäre, oben beschriebene Positionsbestimmung anhand der Signale der Sensoren 12 und 14 in dem Gerät 10 durchzuführen, wie z.B. in einer extern, wie z.B. einem Server, angeordneten Verarbeitungseinheit, die die Signale der Sensoren 12 und 14 drahtlos über eine Kommunikationsschnittstelle von dem Gerät 10 erhält.

Bevor jedoch bei diesen Details begonnen wird, soll nicht unerwähnt bleiben, dass beim Passieren einer Referenzbake 16 nicht nur eine Korrektur der aktuell berechneten Position des Geräts 10 durchgeführt werden könnte, sondern dass auch eine Abweichung zwischen der aktuell berechneten Position des Geräts 10 und der durch die Korrektur erhaltenen Position, d.h. das Ausmaß der Positionskorrektur, dazu verwendet werden könnte, Parameter der Positionsberechnung anhand des Sensors 12 zwischen der aktuell passierten Referenzbake und den kommenden, als nächstes passierten Referenzbaken zu verwenden. Beispielsweise könnte ein solcher Parameter dazu verwendet werden, die Schrittweiten zu skalieren, die den einzelnen erkannten Schritten des Trägers des Geräts 10 zugeordnet werden. Zusätzlich oder alternativ könnte ein solcher Parameter durch die Rückkopplung mittels der Positionskorrektur eingestellt werden, der eine Richtungsänderung betrifft, um auf diese Weise einen ständigen Links- oder Rechtsdrift bei Auswertung des Signals des Sensors 12 zu reduzieren.

Bei den nachfolgend beschriebenen Ausführungsbeispielen handelt es sich bei dem mobilen tragbaren Gerät 10 exemplarisch um ein mobiles tragbares Kommunikationsgerät, das, wie im Vorhergehenden beschrieben, in ein selbstkalibrierendes Infrastruktursystem zur lokalen Positionserkennung eingebunden werden kann, indem auf die beschriebene Art und Weise eine Kombination von Positionierungstechniken verwendet wird, nämlich die Positionsbestimmung auf Basis eines Bewegungssensors einerseits und eine Positionsbestimmung auf Basis eines Annäherungssensors andererseits, wodurch insgesamt auf einfache Weise eine hochgenaue Positionsbestimmung und insbesondere auch eine selbst-kalibrierende Positionsbestimmung erhalten werden kann, die insbesondere auch im Innenbereich von Gebäuden leicht anwendbar ist.

Die Komponenten des oben beschriebenen Gesamtsystems können beispielsweise in der nachfolgend beschriebenen Ausführungsvariante folgende Komponenten aufweisen, wozu zunächst einmal auf Fig. 2 verwiesen wird.

In dem Fall von Fig. 2 ist das mobile Kommunikationsgerät 10 exemplarisch mit Ein- und Ausgabemitteln 30 versehen, wie z.B. mit einem Touchscreen, einer Tastatur, einem Mikrofon, einem Display, einer Audioschnittstelle und/oder einem Lautsprecher, wobei solche Komponenten bei sogenannten Smartphones bereits üblich sind und es sich bei dem mobilen tragbaren Kommunikationsgerät 10 um ein solches Smartphone handeln kann.

Das mobile, tragbare Kommunikationsgerät 10 ist ferner mit einer optionalen, vorzugsweise einer hoch-bitratigen Übertragungsschnittstelle 32 zur Kommunikation in einem Kommunikationsnetz 34 ausgestattet. Das Kommunikationsnetz 34 weist beispielhaft mehrere Netzknoten Kₓ, K_{y} und K_{z} auf. Wie es im Folgenden beschrieben wird, könnte das Gerät 10 die Drahtlosverbindungen 36 zu diesen Netzknoten optional zur groben Triangulierung der Position des Geräts 10 zwischen wenigstens zwei, möglicherweise aber auch mehreren Sendern bzw. Netzknoten Kₓ, K_{y} und K_{z} des Netzes 34 über die hoch-bitratige Übertragungsschnittstelle 32 verwenden. Die Schnittstelle 32 könnte aber in einer weiteren bevorzugten Ausgestaltung von dem Gerät ferner dazu verwendet werden, um eine Anbindung an weitere, in einem übergeordneten Gesamtsystem befindliche Verarbeitungseinheiten bzw. Speicher vorzunehmen, die in Fig. 2 stellvertretend bei 38 angezeigt sind.

Ferner umfasst das Gerät 10 von Fig. 2 einen Annäherungssensor 14 zur Erkennung der Annäherung des Geräts 10 an eine entsprechende Referenzbake, die, wie es bereits im Vorhergehenden beschrieben wurde, beispielsweise als Funk-, Licht- und/oder Magnetismusquelle ausgebildet sein kann, weshalb der Sensor 14, wie in Fig. 2 dargestellt, als eine nieder-bitratige funkbasierte Kurzstrecken-Übertragungsschnittstelle bzw. Kurzstrecken-Funk-Schnittstelle 14a und/oder als wenigstens ein Magnetfeldsensor 14b und/oder als wenigstens ein optischer Sensor bzw. Lichtsensor 14c zur Erkennung von Licht, und zwar beispielsweise von Infrarotstrahlung, ausgeführt sein kann. Fig. 2 zeigt auch, dass das Gerät 10 wenigstens einen Sensor 12 zur Detektion der Bewegung des mobilen Geräts 10 aufweist, wie z.B. in Form von Lage- und/oder Beschleunigungssensoren.

Das Gerät 10 umfasst ferner wenigstens eine Verarbeitungseinheit 40. Fig. 2 zeigt ferner, dass das Gerät 10 einen Speicher 28 aufweist. Die Verarbeitungseinheit ist mit der Schnittstelle 32, den Ein- und Ausgabemitteln 30, den mindestens einen Sensor 12 und den mindestens einen Sensor 14 sowie dem Speicher 28 kommunikativ verbunden und übernimmt beispielsweise die Verarbeitung der von den Sensoren 12 und 14, aber auch der von den Eingabemitteln 30 und der Übertragungsschnittstelle 32 erhaltenen Informationen sowie die der an die Ausgabemittel 30 und die Übertragungsschnittstelle 32 weiterzureichenden Informationen.

Fig. 2 zeigt ebenfalls Beispiele für Referenzbaken 16. Wie es im Vorhergehenden beschrieben wurde, können Referenzbaken ein Funk-, Licht-, Infrarot- und/oder Magnetfeldsignal erzeugen. Dementsprechend kann eine Referenzbake eine Magnetreferenzbake 16a, eine Lichtreferenzbake 16b oder eine Kurzreichweiten-Kommunikationsschnittstelle bzw. Kurzstreckenfunkreferenzbake 16c sein. Wie es im Vorhergehenden beschrieben wurde, sind Referenzbaken beispielsweise ortsfest in bestimmten Abständen oder an geographisch hinreichend genau bekannten Referenzpunkten angebracht, so dass deren Signal(e) sowie gegebenenfalls darin enthaltene Informationen von dem wenigstens einen Annäherungssensor 14 empfangen werden kann/können.

Wie es bereits im Vorhergehenden beschrieben wurde, wird zur Positionsbestimmung des Geräts 10 von der Kenntnis der geographischen Positionen der Referenzbaken 16 Gebrauch gemacht. Sie sind dem System beispielsweise hinreichend genau bekannt. Das bedeutet beispielsweise, dass wenigstens eine elektronische Karte 26 existiert, in der unter anderem die Positionen der Baken 16 verzeichnet sind. Gegebenenfalls können die Karten weitere geographische Informationen beinhalten, wie z.B. vorab erwähnte geographische Gegebenheiten, zu denen nicht nur Wände 24, wie in Fig. 1 exemplarisch gezeigt, gehören, sondern zu denen beispielsweise auch Grundrisse von Gebäuden, darin befindliches Mobiliar, wie z.B. Regale in einer Verkaufsfläche, oder die Position von Sendern Kₓ, K_{y} und K_{z} des Kommunikationsnetzes 34 gehören. Die Referenzbaken 16 erzeugen vorzugsweise ein Funksignal 42c, Lichtsignal 42b, das beispielsweise ein Infrarotsignal sein kann, und/oder Magnetfeldsignal 42a, das, wie im Vorhergehenden beschrieben, zu Ortungszwecken herangezogen wird.

Die elektronischen Karten bzw. die elektronische Karte 26 können wie im Vorhergehenden beschrieben, in dem Gerät 10 abgelegt sein, wie z.B. dem Speicher 26, was diesem die Fähigkeit verleiht, die schon beschriebene Positionsbestimmung unter Kombination der Signale der Sensoren 12 und 14 beispielsweise als Stand-Alone-Gerät voll funktionsfähig durchzuführen. Alternativ ist es aber möglich, wie es bereits im Vorhergehenden angedeutet wurde, dass die Karte 28 auf einem Server eines übergeordneten Gesamtsystems (in Fig. 1 nicht dargestellt) abgelegt ist, was eine besonders flexible Datenaktualisierung gestattet, wie z.B. bei einer Veränderung der Inneneinrichtung in einem Gebäude, wie z.B. bei einer veränderten Anordnung von Warenregalen oder dergleichen.

Das in Fig. 2 gezeigte optionale Kommunikationsnetz 34 kann beispielsweise Funk-, Licht- und/oder Infrarot-basiert sein. Es kann dem Gerät 10 beispielsweise den Zugang bzw. die Kommunikation mit weiteren Verarbeitungseinheiten ermöglichen, wie z.B. eben einer Verarbeitungseinheit eines Systems, damit im Vorhergehenden beschriebene Positionsbestimmung unter Weiterleitung der Signale der Sensoren 12 und 14 nach außen extern zu dem Gerät 10 durchgeführt wird, oder mit anderen mobilen Geräten, für das eines stellvertretend bei 38 in Fig. 2 veranschaulicht ist.

Das mobile tragbare Kommunikationsgerät 10 von Fig. 2 kann beispielsweise ein modernes Mobiltelefon, ein Tablet-Computer oder ein tragbarer Computer sein. Es kann sich allerdings auch um ein dezidiertes Gerät nur für die Positionsbestimmung selbst handeln.

Die Übertragungsschnittstelle 32 kann insbesondere eine Funkschnittstelle gemäß internationalen Standards sein, wie z.B. eine Mobilfunkschnittstelle, wie z.B. eine GSM-Schnittstelle, oder auch eine Schnittstelle zur lokalen Kommunikation, wie z.B. Wi-Fi.

Soweit die nieder-bitratige Kurzstrecken-Übertragungsschnittstelle 14a betroffen ist, so kann diese auf beispielsweise auch Bluetooth, ZigBee, Z-Wave-, ANT oder ähnlichen Techniken basieren.

Im Zusammenhang mit der eigentlichen Lokalisationsaufgabe unter Verwendung der Kommunikation der Signale der Sensoren 12 und 14 sind beispielsweise die hoch- und nieder-bitratigen Netzstrukturen 34 und 16c verwendbar. Sie besitzen Übertragungsschnittstellen Kₓ, K_{z} bzw. 16c, die eine zellulare Netzorganisation aufweisen, so dass eine Groblokalisierung schon dahin gehend erfolgen kann, dass festgestellt wird, in welcher Zelle des Netzwerks sich das Gerät 10 befindet. Diese Groblokalisation kann, wie es im Vorhergehenden kurz angedeutet und im Folgenden noch näher ausgeführt wird, beispielsweise dazu verwendet werden, unterschiedliche Referenzbaken voneinander zu unterscheiden bzw. eine aktuell passierte Referenzbake zu identifizieren.

Wie es in Fig. 2 veranschaulicht ist, kann der Sensor 12 Sensoren zur Detektion der Bewegung des mobilen Geräts 10 in Form von Bewegungssensoren umfassen, wie z.B. einen oder mehrere Gyroskope 12a, einen oder mehrere Beschleunigungsmesser bzw. Accelerometer 12b und/oder einen oder mehrere elektronische Kompass-Sensoren bzw. Magnetometer 12c. Die Sensoren 12a-12c werden von der Verarbeitungseinheit 40 entweder einzeln oder über Algorithmen miteinander gekoppelt im Verbund genutzt. Beispielsweise werden die Signale dieser unterschiedlichen Sensoren 12a-12c einem sogenannten "Fusen" unterzogen, um die Bewegung des Geräts 10 in einem Koordinatensystem zu beschreiben, das beispielsweise stets zur Vertikalen und optional zu den Haupthimmelsrichtungen ausgerichtet ist und optional beispielsweise hinsichtlich der unter den Sensoren vorhandenen Redundanzen durch geschickte Auswahl und Verrechnung hinsichtlich der Genauigkeit optimiert ist.

Bei dem Magnetometer bzw. Magnetfeldsensor 12c kann es sich beispielsweise um einen Hall-Sensor handeln, wobei derselbe beispielsweise nur auf eine, oder aber auf mehrere räumliche Feldrichtungen anspricht.

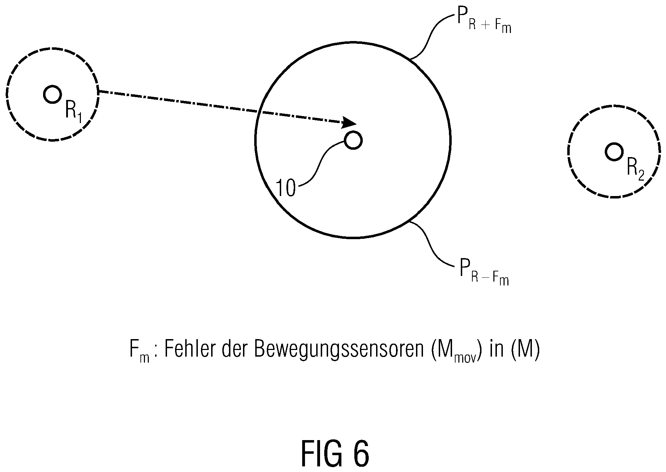

Auf der Verarbeitungseinheit 40 kann beispielsweise ein Programm installiert sein, das die Signale der Sensoren 12 zur Detektion der Bewegung des Geräts 10 auswertet und eine relative Bewegung des Geräts 10 errechnet, nämlich beispielsweise Richtung, Geschwindigkeit sowie in Verbindung mit einer dazu gehörigen Zeitdifferenz möglicherweise auch eine Distanz. Die Berechnung ist natürlich durch die Ungenauigkeiten der Sensoren 12a-12c noch relativ ungenau und die Fehler, die in der nachfolgenden Fig. 6 mit Fₘ angezeigt sind, addieren sich über die Zeit und die Anzahl der Bewegungen bzw. Richtungsänderungen, wie es in Fig. 1 mit den Bezugszeichen 20 und 20' angedeutet wurde. Wie bereits erwähnt, ist es vorteilhaft, wenn die Referenzbaken 16 räumlich begrenzte Signale 42a-42b mittels beispielsweise Funk, Magnetismus und/oder Licht aussenden, um, wie in Fig. 1 gezeigt, Bereiche 18 um die jeweilige Referenzbake 16 herum abzudecken, wobei bei der Verteilung der Referenzbaken 16 beispielsweise darauf geachtet wird, dass sich durch zwei Referenzbaken 16 erzeugte Signale im Rahmen der Nachweisbarkeit bzw. Detektierbarkeit durch den Annäherungssensor 12 örtlich nicht überlappen.

Wie es im Vorhergehenden beschrieben wurde, wäre es möglich, dass Ausführungsbeispiele der vorliegenden Anmeldung mit lediglich einer Referenzbake auskommen. Wenn allerdings mehrere Referenzbaken verwendet werden, existieren unterschiedliche Möglichkeiten, um zur Lokalisierung bzw. Positionsbestimmung des mobilen tragbaren Geräts 10 die Referenzbaken voneinander unterscheiden zu können, d.h. sie zu identifizieren, wenn die jeweilige Referenzbake von dem Gerät 10 passiert wird. Die Ausführungsbeispiele reichen von solchen, bei denen die jeweilige Referenzbake lediglich ein von anderen Referenzbaken nicht-unterscheidbares Signal aussendet, bis hin zu solchen Ausführungsbeispielen, bei welchen die Referenzbaken anhand ihrer Signale unterscheidbar sind, d.h. die Signale eine Information enthalten, die eine eindeutige Identifikation der jeweiligen Referenzbake ermöglicht. In dem Fall, dass das Signal einer Referenzbake eine Identifikationsinformation aufweist, kann es sein, dass diese auch eine Information über die Position bzw. den Ort der Referenzbake selbst enthält, so dass ein Nachschlagen in der elektronischen Karte 26, um anhand der Identität der Referenzbake den Ort derselben in der Karte 26 nachzuschlagen, nicht mehr notwendig wäre.

In anderen Worten ausgedrückt, können die Signale der Referenzbaken 16 in einer vereinfachten Ausführungsform lediglich dazu erzeugt werden, um die Nähe zu einem beliebigen Referenzpunkt zu indizieren, nämlich dem Ort, an dem die jeweilige Referenzbake angeordnet ist. In diesem Fall können andere Hinweise verwendet werden, um die Referenzbaken voneinander zu unterscheiden. Gemäß einem nachfolgend beschriebenen Ausführungsbeispiel kann beispielsweise die Zellenstruktur des Kommunikationsnetzes 34 dazu verwendet werden, eine Groblokalisierung vorzunehmen, die es dann ermöglicht, ein von dem Annäherungssensor 14 detektiertes Signal einer unter mehreren Referenzbaken 16 eindeutig zuzuordnen, die sich anhand ihrer Signale beispielsweise nicht unterschieden, weil sich beispielsweise in einer aktuellen Zelle des Kommunikationsnetzes 34 stets lediglich eine Referenzbake 16 befindet. In diesem Fall umfasst also die Positionsbestimmung des Gerätes beispielsweise zunächst einmal die Groblokalisierung des Geräts 10 über beispielsweise das Kommunikationsnetz 34, woraufhin in dem Fall des Detektierens eines Signals 42a-c einer Referenzbake 16 die Referenzbake identifiziert wird, indem in der elektronischen Karte 26 in dem grob lokalisierten Gebiet nachgeschlagen wird, in welchem sich das Gerät 10 gemäß der Groblokalisierung befindet, d.h. diejenige Referenzbake 16 herausgefunden wird, die sich in diesem grob lokalisierten Gebiet befindet.

In einer weitern bevorzugten Ausgestaltung können die Signale der Referenzbaken 16 aber auch eine Information enthalten, die insbesondere eine Identifizierung, wie z.B. eine eindeutige Identifizierung einer bestimmten Bake 16 innerhalb einer Gruppe von mehreren Referenzbaken 16 bzw. innerhalb einer entsprechenden Gruppe von mehreren Referenzpunkten, an denen diese Referenzbaken 16 angeordnet sind, ermöglicht. Die Information kann ein digitales, aber auch ein analoges Signal sein. Die Information in den Signalen der Referenzbaken 16 ist beispielsweise, lediglich eine nominal skalierte Indexierung zu unterscheiden zur Unterscheidbarkeit der Referenzbaken 16 untereinander. In einer weiteren bevorzugten Ausgestaltung können die Signale der Referenzbaken 16 aber auch eine Information enthalten, die den Ort der jeweiligen Referenzbake 16 angibt, d.h. die Referenzposition, wodurch die Referenzbaken 16 ebenfalls voneinander unterscheidbar wären, und woraus gleichzeitig die Kenntnis über die Referenzposition der jeweiligen Referenzbake 16 bereits gewonnen wäre, ohne separat in beispielsweise der Karte 26 nachschlagen zu müssen. Neben der Ortsinformation könnte auch eine Richtungsinformation in dem Signal einer jeweilige Referenzbake 16 enthalten sein. Darauf wird später noch eingegangen. Insbesondere ist es eben möglich, dass eine Referenzbake 16 so angeordnet ist und ein Signal so ausgibt, dass der Annäherungssensor 14 dem Signal ferner eine Information daraus entnehmen kann, in welcher Richtung das Gerät 10 die jeweilige Referenzbake 16 passierte. Für Details hierzu wird auf die nachfolgende Beschreibung verwiesen. Vorerst soll es ausreichen, darauf hinzuweisen, dass die Signale der Referenzbaken 16 auch eine Information enthalten könnten, die eine absolute oder relative Richtung des Geräts 10 beim Passieren der jeweiligen Referenzbaken enthalten bzw. sich eine solche Information beim Passieren der Referenzbake ergibt. Möglicherweise handelt es sich bei dem Signal lediglich um ein sogar identifikationsloses für die Referenzbaken 16 gleichermaßen verwendetes Signal, und erst bei Durchlaufen desselben ergibt sich für den Sensor 14 eine solche Richtungsinformation. Für nähere Details wird, wie soeben erwähnt, auf die nachfolgende Beschreibung verwiesen.

Die vorerwähnten Signale 42a-42c der Referenzbaken 16 werden durch den Annäherungssensor 14 im mobilen Gerät 10 empfangen, wobei die Information bei den noch hier beschriebenen Ausführungsbeispielen mittels der Verarbeitungseinheit 40 gleich im tragbaren Gerät 10 extrahiert wird.

Wie bereits erwähnt, kann es sich bei dem Kommunikationsnetz 34 beispielsweise um ein Mobilfunknetz oder ein lokales, drahtloses Datenübertragungsnetz handeln.

Zusammenfassend zeigt also Fig. 2 ein Gerät 10, das in ein System zur Positionsbestimmung des Geräts 10 einbindbar ist und hier exemplarisch einen oder mehrere Gyroskope 12a, einen oder mehrere Accelerometer 12b und/oder einen oder mehrere Magnetometer 12c als Bewegungssensor 12 umfasst. Das Gerät 10 umfasst exemplarisch als Näherungssensor 14 einen oder mehrere Magnetometer, einen oder mehrere Kurzreichweiten-Kommunikationsnetzstellen und/oder einen oder mehrere Lichtsensoren, wobei darauf hingewiesen wird, dass sich Näherungssensor 14 und Bewegungssensor 12 einen oder mehrere Magnetometer teilen können. Als Beispiele für Referenzbaken 16 wurden magnetische, Licht-basierte und Kurzstrecken-Kommunikationsschnittstellen gezeigt, wobei darauf hingewiesen wird, dass Referenzbaken 16 lediglich von einer Sorte oder aber von verschiedenen Sorten vorhanden sein könnten.

Nachdem im Vorhergehenden grob die Funktion und Bezug nehmend auf Fig. 2 der Aufbau eines Geräts 10 gemäß einem bevorzugten Ausführungsbeispiel beschrieben wurde, wird im Folgenden noch einmal die Funktionsweise unter Hinzunahme der nachfolgenden Figuren näher beschrieben. Diese näheren Details sollen für alle im Vorhergehenden beschriebenen Ausführungsbeispiele einzeln oder in Kombination gelten, um ausgehend von diesen im Vorhergehenden beschriebenen Ausführungsbeispielen zu weiteren Ausführungsbeispielen zu gelangen.

Das wenigstens eine mobile tragbare Gerät 10 wird vom Menschen getragen oder an Gegenständen befestigt, wie z.B. einem Einkaufswagen, einer Gehhilfe, einem Rollstuhl oder dergleichen. Referenzbaken 16, wie z.B. wenigstens zwei möglicherweise aber auch lediglich eine, werden beispielsweise in einem Raster angebracht. Das Raster ergibt sich beispielsweise aus der gewünschten Ortsauflösung (Granularität) des Systems sowie aus der absoluten Genauigkeit der Positionsbestimmung durch den wenigstens einen Bewegungssensor 12 zur Detektion der Bewegung des mobilen tragbaren Geräts 10. Je höher die gewünschte Granularität, bzw. je ungenauer die Ergebnisse der Positionsbestimmung durch den wenigstens einen Sensor 12 zur Detektion der Bewegung des Geräts 10 ist, umso höher wird beispielsweise die Dichte bzw. Anzahl der zur Erreichung einer vorgegebenen absoluten bzw. relativen Lokalisierungsgenauigkeit erforderlichen Referenzbaken sein und die Dichte bzw. Anzahl dementsprechend gewählt.

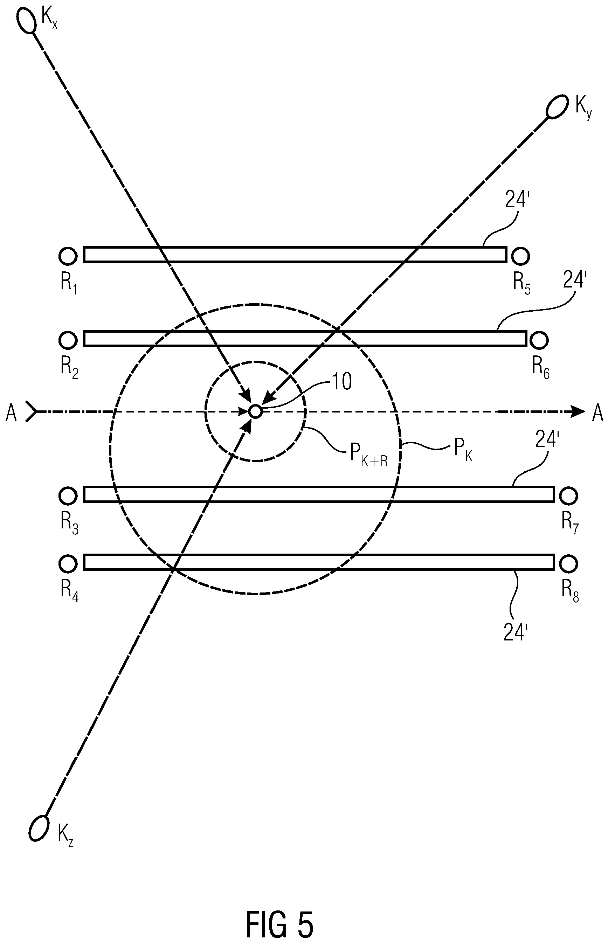

Spezifische räumliche Gegebenheiten, wie sie im Vorhergehenden stellvertretend mit dem Bezugszeichen 24 in Fig. 1 beschrieben wurden, können beispielsweise zu einer Reduktion der Anzahl von Referenzbaken 16 genutzt werden. Ist beispielsweise die Bewegung in einer bestimmten Gegend nur in einer Achse möglich, wie z.B. in einem langgestreckten Gang eines Gebäudes oder zwischen Warenregalen in einem Supermarkt, wie es später noch Bezug nehmend auf Fig. 5 erläutert wird, kann die Genauigkeit des Algorithmus, der die Informationen des wenigstens einen Sensors 12 zur Detektion der Bewegung des Geräts 10 auswertet, höher sein als in Umgebungen, die eine beliebige Bewegung ermöglichen. Sind diese geographischen Gegebenheiten der Verarbeitungseinheit 40 direkt oder indirekt über ein Kommunikationsnetz 34 und darin erreichbarer weiterer Verarbeitungseinheiten 38 oder Speicher in Form einer Karte 26 bekannt, können sie in einer bevorzugten Ausgestaltung in die Berechnung der Position Eingang finden.

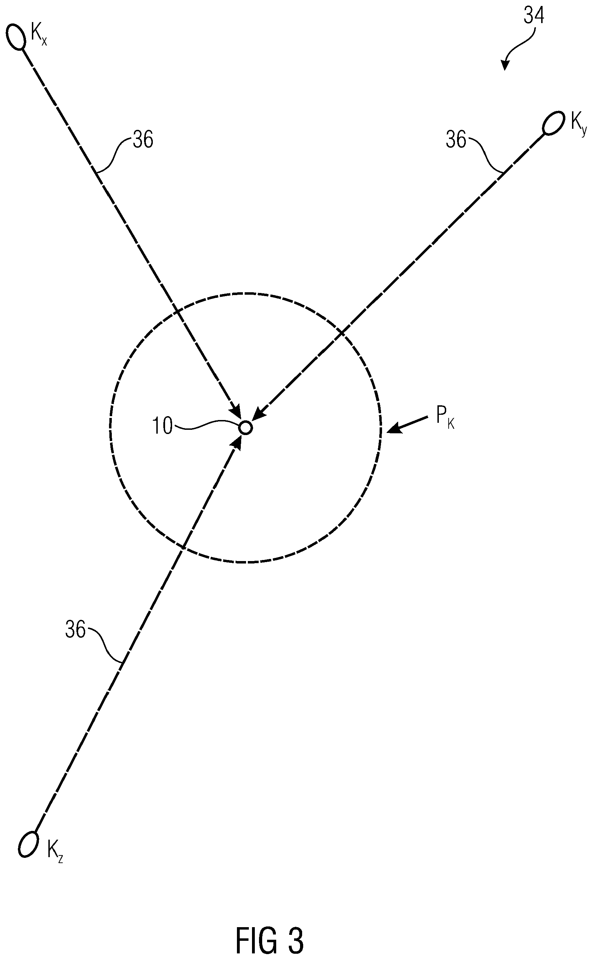

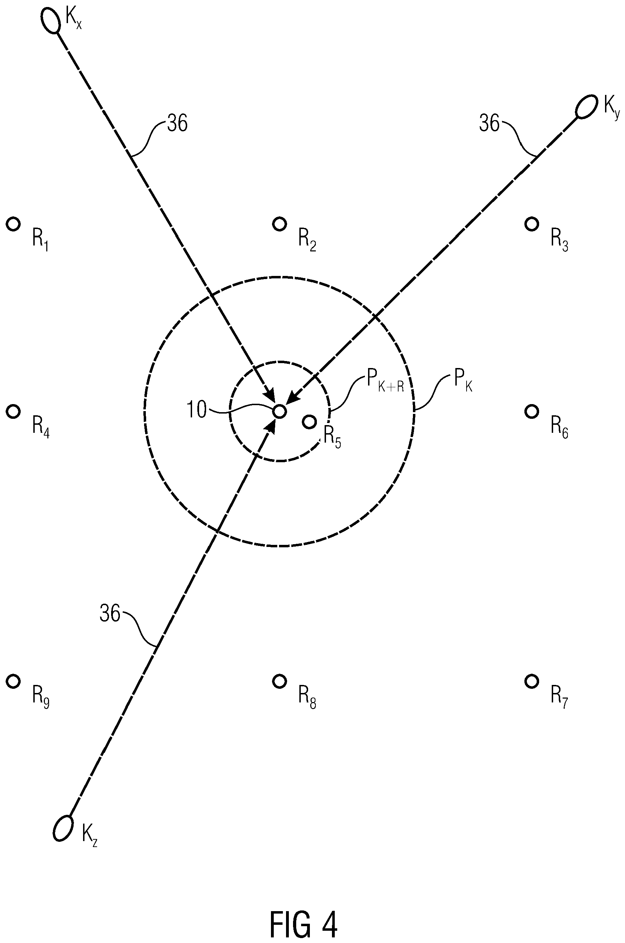

Ferner können die optionalen Kommunikationsnetze 34 dazu genutzt werden, eine ungefähre Position zu bestimmen, deren Genauigkeit dann aus der Kenntnis der Positionierung der Referenzbaken 16 gesteigert wird. Dies wurde im Vorhergehenden unter Hinweis auf eine "Grobpositionierung" angedeutet. Beispielsweise errechnet das mobile tragbare Gerät 10 die Position des Geräts 10 zunächst ungefähr anhand einer Triangulierung mittels der Messung von Kommunikationsnetzwerken von Sendern Kₓ, K_{y} bzw. K_{z} des Kommunikationsnetzes 34, deren Positionen beispielsweise in der Karte 26 verzeichnet sind. Dies ist beispielsweise in Fig. 3 gezeigt, die mittels der Groblokalisierung bzw. Lokalisierung mittels des Kommunikationsnetzes 34 erhaltene grobe Positionsangabe P_{K} des Geräts 10 ist in der Fig. 3 mit P_{K} angezeigt. "Grob"-Positionierung soll anzeigen, dass die durch diese Grobpositionierung erhaltene Positionsangabe P_{K} noch mit einem Unsicherheitsfaktor bzw. einer Ungenauigkeit versehen ist, die größer ist als eine Zielgenauigkeit, wie sie durch eine Kombination der Signale von den Sensoren 12 und 14 erzielt wird. Andererseits reicht die Groblokalisierung aus, um eine Referenzbake 16 aus mehreren Referenzbaken eindeutig zu identifizieren, wie es anhand der nachfolgenden Fig. 4 erläutert wird.

Passiert nämlich das mobile tragbare Gerät 10 die nächstliegende bzw. aktuell passierte Referenzbake 16, nämlich R₅ im Falle von Fig. 4, kann das mobile tragbare Gerät 10 eine deutlich exaktere Position mit der Karte 26 abgleichen. Die exaktere Position ist in Fig. 4 mit P_{K+R} dargestellt, in anderen Worten ausgedrückt, ist es eben möglich, mittels der Grobpositionierung, wie sie durch P_{K} dargelegt ist, eine Referenzbake aus den mehreren Referenzbaken heraus zu identifizieren, nämlich die Referenzbake R₅ aus den in Fig. 4 gezeigten exemplarisch neuen Referenzbaken R₁-R₉, und hernach legt eben der Übertragungsbereich 18 eben jener Referenzbake R₅ die Ungenauigkeit der Positionsangabe P_{K+R} fest. Im Folgenden wird noch darauf hingewiesen, dass die Grobpositionierung, wie sie durch P_{K} dargestellt ist, nicht unbedingt durch Triangulierung erzielt werden muss, sondern dass dazu gegebenenfalls lediglich bestimmt wird, in der Zelle wessen Senders unter den Sendern Kₓ, Ky bzw. K_{z} des Kommunikationsnetzes sich das Gerät 10 befindet.

Nach dem Passieren einer Referenzbake 16 durch das Gerät 10 wird, wie im Vorhergehenden beschrieben, Sensor 14 verwendet, um - bevorzugt fortlaufend bis zur Detektion einer Annäherung an eine andere bzw. nächste Referenzbake 16 - weitere Positionen relativ zu dem Referenzpunkt zu berechnen, wie z.B. den Referenzpunkt der aktuell durchlaufenden Referenzbake oder zumindest einer korrigierten Position des Geräts 10, wie sie durch den Annäherungssensor 14 erhalten worden ist, wobei die Positionsbestimmungen mittels des Sensors 12 bzw. die darauf resultierende berechnete Position mit P_{K+R+M} in Fig. 5 angegeben ist, wobei die Fig. 5 im Vergleich zur Fig. 4, die das Gerät 10 in einer Umgebung ohne zusätzliche geographische Gegebenheiten umgeben von lediglich einer Verteilung von Kommunikationsnennern Kₓ, K_{z} und Referenzbaken R₁-R₉ zeigt, das Gerät 10 in einer Umgebung zeigt, die zusätzlich zu Kommunikationsknoten Kₓ-K_{z} und Referenzbaken R₁-R₈ geographische Gegebenheiten - hier exemplarisch in Form von Regalen 24' - aufweist, wobei Fig. 5 noch exemplarisch mit einer Strichpunktlinie a-·-·-· -·-a den im Vorhergehenden erwähnten Aspekt veranschaulicht, wonach beispielsweise die Bewegungsfreiheitsgrade des Geräts 10 bei der Bewegung zwischen den Referenzbaken R₁-R₈ exemplarisch auf einen geradlinigen Pfad bzw. eine Bewegungsachse eingeschränkt ist, die entlang eines Flures führt, der zwischen zwei Regalen 24' entlangführt. In letztgenannter Hinsicht zeigt also Fig. 4 einen Zustand, da sich das Gerät 10 gerade in einem Umgebungsbereich einer Referenzbake R₅ befindet, in welcher Situation folglich eine Korrektur der Position möglich ist, wie sie bis zu dieser Referenzbake R₅ auf Basis des Bewegungssensors 12 bestimmt worden ist, während Fig. 5 eine Situation zeigt, bei der sich das Gerät 10 zwischen Referenzbaken R₁-R₈ so befindet, dass der Sensor 14 das Signal keiner Referenzbake empfängt und die Positionsbestimmung relativ zu der korrigierten Position der zuletzt passierten Referenzbake, wie z.B. R₂ in Fig. 5, solange durchführt, bis der Sensor 14 wieder das Signal einer Referenzbake erhält, wie z.B. R₆ oder R₇ aus Fig. 5, was im Umkehrschluss auch bedeutet, dass die Ungenauigkeit der Positionsangabe P_{K+R+M} in Fig. 5 stetig von dem Passieren der zuletzt passierten Referenzbake R₂ bis zu dem Passieren der nächsten Referenzbake größer wird, wie es in Fig. 1 mit den Bezugszeichen 20 bzw. 20' angedeutet wurde.

Noch einmal mit anderen Worten ausgedrückt, kann das tragbare mobile Gerät 10 wie in Fig. 3 gezeigt beispielsweise an der Übertragungsschnittstelle 32 (vgl. Fig. 2) die empfangenen Signalstärken der Sensorsignale 36 den Kommunikationssensor Kₓ, K_{y}, K_{z} messen. Dann wird beispielsweise in der Verarbeitungseinheit 40 des Geräts 10 unter Nutzung der Karte 26 die ungefähre Position errechnet, und zwar mit einer Ungenauigkeit, die in Fig. 3 durch das ungefähr kreisförmig begrenzte Gebiet P_{K} versinnbildlicht ist. Wenn nun im Signal der Referenzbaken R₁-R₉ keine weitere Information enthalten ist, kann, wie es Bezug nehmend auf Fig. 4 erläutert wurde, mit Hilfe der Karte 26 die Verarbeitungseinheit 40 des Geräts 10 die genaue Position des Geräts 10 mit einer Ungenauigkeit, die durch das ungefähr kreisförmig begrenzte Gebiet P_{K+R} dargestellt ist, errechnen, wenn sich beispielsweise nur jeweils eine Referenzbake R₁-R₉ innerhalb der ungenauen Position befindet, die durch das ungefähr kreisförmig begrenzte Gebiet P_{K} versinnbildlicht ist. In anderen Worten ausgedrückt, befinden sich die Referenzbaken R₁-R₉ bevorzugt so verteilt, dass sich unabhängig von der aktuellen Position des Geräts 10 jeweils stets nur eine Referenzbake 16 innerhalb des Gebiets P_{K} befindet.

Ist kein Kommunikationsnetz 34 vorhanden, kann alternativ zu der Heranziehung der Groblokalisierung mittels dieses Netzes zur Unterscheidung der Referenzbaken den Signalen der Referenzbaken eine Information über die Identität der jeweiligen Bake 16 hinzugefügt sein, wobei die Verarbeitungseinheit 40 dann beispielsweise die genaue Position P_{R} unmittelbar bestimmt. Die Genauigkeit von P_{R} und P_{K+R} wäre dann identisch.

Wie nun schon oben im Zusammenhang mit den Elementen 24 und 24' beschrieben, können, falls in der Karte 26 weitere Informationen über geographische Gegebenheiten enthalten sind, wie z.B. eben der Standort von Warenregalen 24', diese dazu verwendet werden, die Ungenauigkeiten der aus dem Signal des Bewegungssensors 12 und der optionalen Triangulierung der Kommunikationsnetzsender Kₓ, K_{y}, K_{z} gewonnenen Positionen des Geräts 10 reduziert werden, da gewisse Freiheitsgrade der Bewegung des mobilen tragbaren Geräts nicht oder nur sehr eingeschränkt genutzt werden können bzw. die Abweichungen der Messwerte durch die Berücksichtigung der geographischen Eigenschaften limitiert werden können.

Die Referenzbaken 16 sind bevorzugt in einem Abstand zueinander angebracht, der von der Genauigkeit des wenigstens einen Bewegungssensors 12 zur Detektion der Bewegung des mobilen tragbaren Geräts 10, den optional zur Positionsbestimmung ausgenutzten geographischen Gegebenheiten 24, 24' und der Granularität der Positionsbestimmung mittels beispielsweise Triangulierung von Sendern des Kommunikationsnetzes 34 abhängig. Beispielsweise kann eine weitere Relation der Anzahl der Referenzbaken 16 bei gleichbleibender Genauigkeit der Positionsbestimmung ermöglicht werden, wobei beispielsweise auf die Referenzbaken R₁-R₈ von Fig. 5 verwiesen wird. Ferner wäre es möglich, die von den Referenzbaken 16 abgestrahlten Signale zu vereinfachen. Steht eine ungefähre Position durch das wenigstens eine Kommunikationsnetz 34 fest, könnte, wie es im Vorhergehenden beschrieben wurde, die schlichte Anwesenheit eines an sich "informationslosen" Signals einer Referenzbake 16 die Position und, optional, die Richtung mittels der Karte 26 kalibrieren, wenn der Abstand der Referenzbaken 16 größer ist als die Ungenauigkeit der Positionsbestimmung mittels Triangulierung unter Nutzung des Kommunikationsnetzes 34.

Wie schon beschrieben, vergrößert sich mit zunehmendem Abstand des mobilen tragbaren Geräts 10 von einer Referenzbake 16 der Fehler Fₘ der Positionsbestimmung auf Basis bzw. mittels des Bewegungssensors 12. Das ist in Fig. 6 veranschaulicht, die das Gerät 10 auf dem Weg von dem Passieren einer Referenzbake R₁ zu einer Referenzbake R₂ veranschaulicht, wobei sich das Gerät 10 gerade zwischen diesen Referenzbaken befindet, wobei der augenblickliche Fehler bzw. die augenblickliche Ungenauigkeit der berechneten Position auf Basis des Bewegungssensors 12 mit dem Kreis P_{r-Fm} dargestellt ist. Das heißt, die Auflösung der Position an einer Referenzbake, nämlich P_{R}, ist am höchsten und wird zunehmend geringer P_{R-Fm} bis erneut eine Referenzbake passiert wird, nämlich R₂ in Fig. 6, und sich das System wieder kalibrieren kann.

Zur Garantie der Systemgranularität, d.h. dauerhafte bzw. minimale Auflösung im Raum, können die oben beschriebenen Referenzbaken 16 in einem hinreichend geringen Abstand angebracht werden. Dieser Abstand errechnet sich beispielsweise aus der Addition des maximalen Fehlers der Positionsbestimmung mittels des Bewegungssensors 12 zur Detektion der Bewegung des Geräts 10 in Verbindung mit der Karte 26 und kann unter der Granularität der Systemauflösung liegen.

Anders ausgedrückt zeigt eben Fig. 6, dass die Abstände zwischen zwei Referenzbaken 16, dort exemplarisch R₁ und R₂, so gewählt werden können, dass der sich addierende Fehler der relativen Positionsbestimmung, nämlich Fₘ, durch den Bewegungssensor 12 und die Restungenauigkeit der Referenzbaken 16, nämlich R₁ und R₂ in Fig. 6 zu einer Positionsbestimmung P_{R-Fm}, führt, die die gewünschte Systemgenauigkeit gewährleisten.

Wie es im Vorhergehenden erwähnt wurde, können zur weiteren Vereinfachung des Systems und der Reduktion der Anzahl von Referenzbaken in einer weiteren Ausführungsform der Anmeldung Annahmen über typische Bewegungsabläufe des zu lokalisierenden Gegenstands gemacht werden, nämlich beispielsweise das Bewegungsmodell des Trägers bzw. des Menschen des Geräts 10 im Allgemeinen verwendet werden, also die Größe des Trägers bzw. Menschen des Geräts 10 verwendet werden. Fließen diese Informationen in die Algorithmen auf der Verarbeitungseinheit 40 ein, die zur Positionsbestimmung zwischen den Referenzbaken 16 auf Basis des Bewegungssensors 12 verwendet werden, kann beispielsweise die Lokalisierungsgenauigkeit vergrößert bzw. kann die durchschnittliche Systemgenauigkeit erhöht werden. Dann weisen beispielsweise nur wenige Gegenstände mit untypischem Verhalten höhere Positionierungsfehler auf, wie z.B. dann, wenn der Träger des Geräts 10 anstelle entsprechend des Bewegungsmodells zu gehen, hüpft.

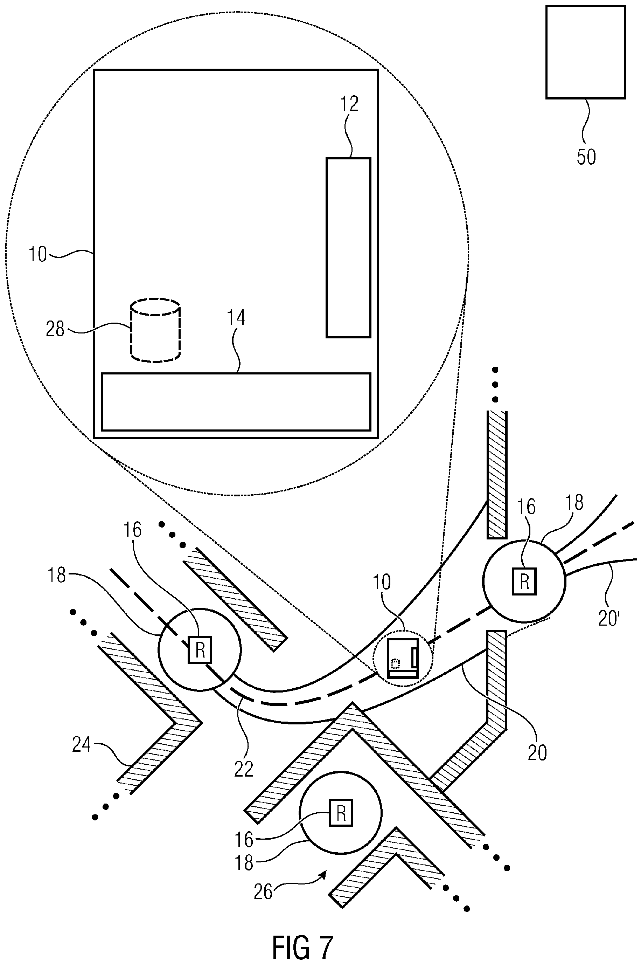

Der Vollständigkeit halber zeigt Fig. 7 noch einmal die oben bereits kurz erwähnte Möglichkeit, wonach die tatsächliche Positionsbestimmung unter Kombination der Signale von Positionssensor 12 und Annäherungssensor 14 des Geräts 10 nicht innerhalb bzw. von dem Gerät 10 selbst ausgeführt wird, sondern von einem externen Gerät bzw. in einer externen Verarbeitungseinheit 50, die die Signale beispielsweise über eine Schnittstelle, wie z.B. die Schnittstelle 32 von den Sensoren 12 und 14 erhält und den so bestimmten Ort entweder selbst zu eigenen Zwecken verwendet, wie z.B. zur Verfolgung des Geräts 10, oder zusätzlich oder alternativ den bestimmten Ort wieder zurück an das Gerät 10 übermittelt, wie z.B. zur Anzeige an dem Gerät 10 gegenüber einem Benutzer bzw. Träger des Geräts 10.

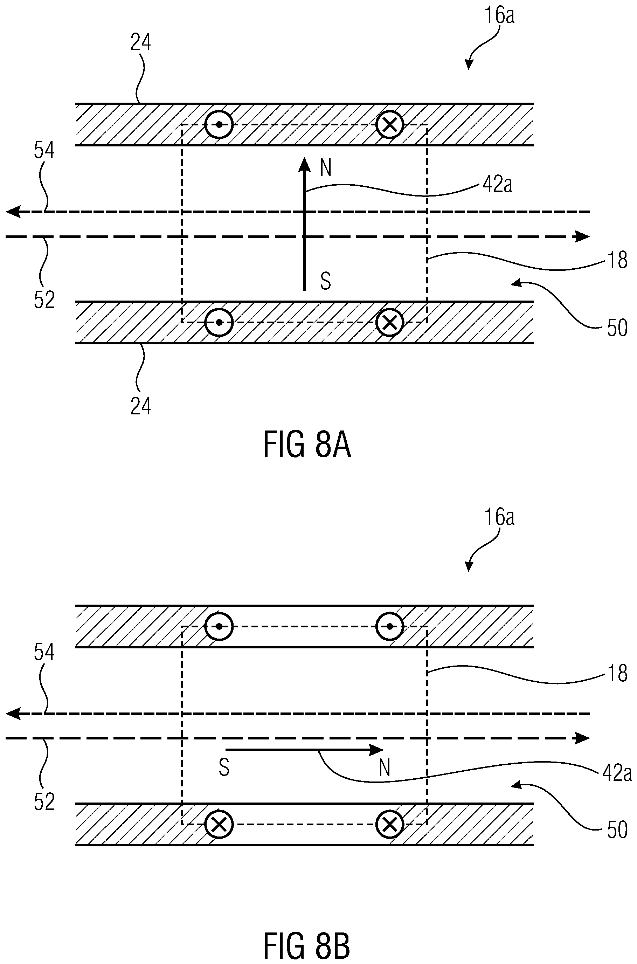

Und schließlich zeigt Fig. 8a und Fig. 8b der Vollständigkeit halber noch die oben bereits erwähnte Möglichkeit, dass eine Referenzbake 16 auch eine Möglichkeit bietet, über den Sensor 14 zu erkennen, in welche Richtung das Gerät 10 diese jeweilige Referenzbake soeben passiert. Fig. 8a und 8b beziehen sich exemplarisch auf magnetische Referenzbaken 16a. Die Referenzbake 16a aus den Figuren 8a und 8b umfasst eine stromdurchflossene Spule, die dem Erdmagnetfeld ein künstliches Magnetfeld 42a überlagert, das das Signal der jeweiligen Bake 16a darstellt. Das Signal 42a könnte beispielsweise amplitudenmoduliert sein, und zwar mit einer Modulationsfrequenz, die beispielsweise sehr nieder-frequent ist, wie z.B. mit einer Frequenz kleiner 50 Hz, wobei beispielsweise zwischen nicht-durchflossenem Zustand und strom-durchflossenem Zustand, bei dem beispielswiese dir Magnetfeldrichtung stets gleich ist, gewechselt wird. In Fig. 8a ist die Spule beispielsweise so in Wände 24 eingebaut, dass das Magnetfeld 42a der Bake 16a quer zu einem Gang 50 zwischen den Wänden 24 verläuft, der durch die Wände 24 definiert wird. Durch die Eigenschaft von Spulen, wonach deren Magnetfeld innerhalb der Spule am größten ist und außerhalb extrem schnell abfällt, befindet sich der Umgebungsbereich 18 der Bake vornehmlich nur innerhalb des Ganges 50 zwischen der Windung in der einen Mauer 24 und der Windung in der anderen Mauer 24 der Spule der Bake 16a. Zudem kann davon ausgegangen werden, dass das Gerät 10 bzw. der Träger des Geräts 10 den Gang entweder in der einen Richtung 52 oder in der anderen Richtung 54 passiert. Je nachdem, in welche Richtung er dies tut, zeigt der Nordpol des künstlichen Magnetfeldes 42a entweder nach links relativ zur Lokomotionsrichtung oder nach rechts relativ zur Lokomotionsrichtung. Je nachdem kann auf die Richtung 52 bzw. 54 geschlossen werden, in welche sich das Gerät 10 von der Referenzbake 16a soeben bewegt, welche Information zur Korrektur der augenblicklich berechneten Lokomotionsrichtung des Trägers des Geräts 10 verwendet werden kann.

Fig. 8b zeigt eine Möglichkeit, wonach die Spule der Referenzbake 16a so in die Mauern 24 eingebaut ist, dass das Magnetfeld 42a längsseits des Ganges 50 weist, nämlich hier exemplarisch entlang der Richtung 52 und entgegengesetzt zur Richtung 54. Anders ausgedrückt verlaufen im Fall von Fig. 8a die Windungen jeweils innerhalb einer Wand 24 und im Fall von Fig. 8b so, dass der Gang 50 durch die Windungen hindurch verläuft. Auch in Fig. 8b kann beim Passieren der Bake 16a anhand des Signals von dem Annäherungssensor 14 erkannt werden, ob das künstliche Magnetfeld 42a in Lokomotionsrichtung weist, nämlich im Fall 52, oder entgegengesetzt der Lokomotionsrichtung, nämlich im Fall 54.

Die Fig. 8a und 8b sind lediglich exemplarisch. Andere Typen von Signalen für Referenzbaken ermöglichen gegebenenfalls ebenfalls eine Feststellung, in welche Richtung eine Referenzbake passiert wird. Eine Referenzbake könnte hierzu beispielsweise auch ein Signal erzeugen, das nicht nur hinsichtlich seiner Feldstärke in dem Bereich 18 zeitlich variiert, sondern auch örtlich innerhalb des Bereichs 18 variiert, so dass beim Durchschreiten des Bereichs 18 durch den Sensor 14 erkannt werden kann, in welche Richtung der Bereich 18 durchschritten wird.

Somit beschreiben obige Ausführungsbeispiele unter anderem ein mobiles tragbares Gerät, das in Zusammenwirkung mit Signal-aussendenden Referenzbaken 16, deren Position in einer elektronischen Karte in dem mobilen tragbaren Gerät abgelegt sein können, sowie in Zusammenwirkung mit wenigstens einem im mobilen tragbaren Gerät vorhandenen Bewegungssensor, der die Bewegung des mobilen tragbaren Geräts erfasst, seine Position berechnet, wodurch eine genaue Ermittlung der absoluten bzw. relativen Position des mobilen tragbaren Geräts ermöglicht wird. Insgesamt entsteht so ein selbstkalibrierendes Infrastruktursystem zur lokalen Positionserkennung. Dabei zeigt Fig. 2 ein mobiles, tragbares Kommunikationsgerät, das mit Ein- und Ausgabemitteln wie z. B. in Form eines Touchscreens, einer Tastatur, eines Mikrophons sowie eines Displays einer Audioschnittstelle, eines Lautsprechers, etc. wie sie bei sog. smartphones üblich sind, versehen ist und weiter ausgestattet ist mit wenigstens einem Sensor (Mmov) zur Detektion der Bewegung des mobilen tragbaren Kommunikationsgerätes (M) wie z. B. in Form von Lage- und/oder Beschleunigungssensoren), und/oder mit wenigstens einem MagnetfeldSensor (Mmag) und/oder mit wenigstem einem lichtempfindlichen Sensor (Mir) und/oder mit wenigstens einer nieder- bitratigen Kurzstrecken-Übertragungsschnittstelle (Msdr), und/oder mit wenigstens einer hoch- bitratigen (Mbb) Übertragungsschnittstelle und mit wenigstens einer Verarbeitungseinheit (Mcpu), zur Verarbeitung der von den Sensoren und/oder auch der von den Eingabemitteln und Übertragungsschnittstellen erhaltenen und den an die Ausgabemittel und Übertragungsschnittstellen weiterzureichenden Informationen, wobei über die von dem Sensor (Mmov) bereitgestellten Daten die Position des mobilen, tragbaren Kommunikationsgerätes (M) relativ und/oder absolut zu wenigstens einer Referenzbake (Rx) berechenbar ist. Fig. 2 zeigt damit aber auch ein System zur lokalen Positionsbestimmung eines mobilen, tragbaren Kommunikationsgeräts, das mit Ein- und Ausgabemitteln wie z. B. in Form eines Touchscreens, einer Tastatur, eines Mikrophons sowie eines Displays, einer Audioschnittstelle, eines Lautsprechers, etc. wie sie bei sog. smartphones üblich sind, versehen und weiter ausgestattet ist mit wenigstens einem Sensor (Mmov) zur Detektion der Bewegung des mobilen tragbaren Kommunikationsgerätes wie z. B. in Form von Lage-und/oder Beschleunigungssensoren, und/oder wenigstens einem Magnetfeld-Sensor (Mmag), und/oder mit wenigstem einem lichtempfindlichen Sensor (Mir) und/oder mit wenigstens einer nieder- bitratigen Kurzstrecken-Übertragungsschnittstelle (Msdr), und/oder mit wenigstens einer hoch-bitratigen (Mbb) Übertragungsschnittstelle, und mit wenigstens einer Verarbeitungseinheit (Mcpu), zur Verarbeitung der von den Sensoren aber auch der von den Eingabemitteln und Übertragungsschnittstellen erhaltenen und den an die Ausgabemittel und Übertragungsschnittstellen weiterzureichenden Informationen, sowie eine oder mehrere Referenzbaken (Rx, Ry, Rz) (erzeugend ein Funk- Licht- Infrarot und/oder Magnetfeldsignal zu Ortungszwecken), die ortsfest in bestimmten Abständen, oder an geographisch hinreichend genau bekannten Referenzpunkten angebracht sind, wobei die geographischen Positionen der Referenzbaken dem System in Form elektronische 'Karten' (Maps), in denen die Position der Baken verzeichnet sind, bekannt sind, wobei über vorzugsweise ein Kommunikationsnetz (z. B. funk- licht- und/oder infrarotbasiert) (K), der Zugang des mobilen tragbaren Kommunikationsgeräts (M) zu weiteren Verarbeitungseinheiten, oder anderen mobilen Geräten (M') ermöglicht wird.

Ergänzend zu vorhergehender Beschreibung wird darauf hingewiesen, dass der zumindest eine Sensor 12 zusätzlich oder alternativ zu den vorhergehend beschriebenen Beispielen 12a-c auch einen oder mehrere Sensoren zum Empfang einer elektromagnetischen Welle bzw. eines elektromagnetischen Signals aufweisen könnte. Zur Positionsbestimmung zwischen den Baken 16 mittels des einen oder der mehreren Sensoren 12 könnte ein aus einer Bewegung des mobilen tragbaren Geräts relativ zu dem elektromagnetischen Signal resultierender Dopplershifts detektiert und daraus Bewegungsrichtung, - geschwindigkeit und/oder -beschleunigung des Geräts 10 bestimmt werden. Eine solche Dopplershifteffekt-Auswertung könnte auf Funksignale angewendet werden, wie .B. WLAN, Blutooth oder dergleichen. Dieser bzw. Diese Sensoren könnten deshalb auch teilweise mit dem Sensor 14a überlappend gebildet sind, bzw. mit letzterem Hard- und/oder Software teilen. Er bzw. sie könnten als Dopplershiftdetektor bezeichnet werden. Wenn man z.B. die Orte von WLAN, Bluetooth, SDR-Sendern kennt, dann kann zur Positionsbestimmung über einen Dopplershiftdetektor mittels Dopplershiftauswertung festgestellt werden, ob man sich aus einen solchen Sender zubewegt, oder davon entfernt. Misst man die Differenz zwischen zwei Mess-Zyklen, d.h. das Delta der Frequenz zwischen zwei Zyklen, kann man eine Beschleunigung errechnen. Hat das Gerät sogar Zugriff auf eine Referenzfrequenz, kann das Gerät sogar die absolute Geschwindigkeit aus der Dopplershiftauswertung gewinnen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hard-ware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transfe-riert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Mobiles tragbares Gerät mit
wenigstens einem ersten Sensor (12) zur Detektion einer Bewegung des mobilen tragbaren Geräts (10) und
wenigstens einem zweiten Sensor (14) zur Erkennung der Annäherung des mobilen tragbaren Geräts (10) an eine oder mehrere Referenzbaken (16),
wobei das mobile tragbare Gerät (10) ausgebildet ist, unter Ausnutzung einer Kenntnis einer Position der einen oder mehreren Referenzbaken (16) über von dem wenigstens einen ersten Sensor (12) bereitgestellte Daten die Position des mobilen tragbaren Geräts (10) relativ zu der einen oder mehreren Referenzbaken (16) zu berechnen,
wobei der wenigstens eine zweite Sensor (14) ausgebildet ist, um ein von der einen oder mehreren Referenzbaken (16) erzeugtes Signal zu empfangen, und
der wenigstens eine zweite Sensor (14) wenigstens einen Magnetfeldsensor (14b) aufweist und das von der einen oder mehreren Referenzbaken (16) erzeugte Signal ein Magnetfeldsignal ist, oder
das von der einen oder mehreren Referenzbaken (16) erzeugte Signal ein hinsichtlich Feldstärke in einem Umgebungsbereich (18) der einen oder mehreren Referenzbaken (16) zeitlich und örtlich variierendes Signal ist,
wobei das mobile tragbare Gerät (10) ausgebildet ist, um bei einem Passieren einer ersten Referenzbake die berechnete Position durch einen Abgleich mit einer Position der ersten Referenzbake zu korrigieren und zwischen dem Passieren der ersten Referenzbake und einem Passieren einer zweiten Referenzbake die Position des mobilen tragbaren Geräts (10) mittels des wenigstens einen ersten Sensors (12) relativ zu der korrigierten Position unter mit zunehmendem Abstand von der ersten Referenzbake vergrößernder Ungenauigkeit (20) zu berechnen, und über den zweiten Sensor zu erkennen, in welche Richtung des mobile tragbare Gerät eine jeweilige Referenzbake soeben passiert, und die Richtung zur Korrektur einer augenblicklich berechneten Lokomotionsrichtung eines Trägers des mobilen Geräts zu verwenden.

2. Mobiles tragbares Gerät gemäß Anspruch 1, bei dem das mobile tragbare Gerät ausgebildet ist, um bei der Berechnung der Position zwischen dem Passieren der ersten Referenzbake und dem Passieren der zweiten Referenzbake geographische Gegebenheiten (24, 24') in einer elektronischen Karte (26) zu nutzen, um die Ungenauigkeit durch den geographischen Gegebenheiten entsprechenden Einschränkungen von Freiheitsgraden einer Bewegung des mobilen tragbaren Geräts zu reduzieren.

3. Mobiles tragbares Gerät gemäß Anspruch 1 oder 2, das ferner ausgebildet ist, um beim Passieren der ersten Referenzbake auch eine Bewegungsrichtung des mobilen tragbaren Geräts (10) zu korrigieren.

4. Mobiles tragbares Gerät gemäß einem der vorhergehenden Ansprüche, wobei der wenigstens eine erste Sensor (12) einen Lage- und/oder Beschleunigungssensor aufweist.

5. Mobiles tragbares Gerät gemäß einem der vorhergehenden Ansprüche, wobei der wenigstens eine erste Sensor (12) ein oder mehrere Gyroskope und/oder einen oder mehrere Beschleunigungsmesser und/oder einen oder mehrere Magnetometer und/oder einen oder mehrere Dopplershiftdetektoren aufweist.

6. Mobiles tragbares Gerät gemäß einem der vorhergehenden Ansprüche, wobei in dem mobilen tragbaren Gerät eine elektrische Karte gespeichert ist, in der die Position der einen oder mehreren Referenzbaken (16) verzeichnet ist, wobei das mobile tragbare Gerät ausgebildet ist, die elektrische Karte (26) bei der Berechnung zu verwenden.

7. Mobiles tragbares Gerät gemäß einem der vorhergehenden Ansprüche, wobei dasselbe ausgebildet ist, um anhand einer Information in dem Signal der einen oder mehreren Referenzbaken die eine oder mehrere Referenzbake (16) zu identifizieren.

8. Mobiles tragbares Gerät gemäß einem der vorhergehenden Ansprüche, wobei das mobile tragbare Gerät eine Übertragungsschnittstelle zur Kommunikation mit Kommunikationsschnittstellen eines Kommunikationsnetzes (34) aufweist und ausgebildet ist, um anhand der Kommunikation zwischen Übertragungsschnittstelle (32) und Kommunikationsschnittstellen eine Groblokalisierung vorzunehmen und die Groblokalisierung zur Identifikation der einen oder mehreren Referenzbaken zu verwenden.

9. System zur lokalen Positionsbestimmung eines mobilen tragbaren Geräts (10) mit wenigstens einem ersten Sensor (12) zur Detektion der Bewegung des mobilen tragbaren Geräts (10), und wenigstens einem zweiten Sensor (14) zur Erkennung der Annäherung des mobilen tragbaren Geräts (10) an eine oder mehrere Referenzbaken (16), wobei das System die eine oder mehreren Referenzbaken umfasst, und wobei das System ausgebildet ist, unter Ausnutzung einer Kenntnis einer Position der einen oder mehreren Referenzbaken (16) über von dem wenigstens einen ersten Sensor (12) bereitgestellte Daten die Position des mobilen tragbaren Geräts (10) relativ zu der einen oder mehreren Referenzbaken (16) zu berechnen,
wobei der wenigstens eine zweite Sensor (14) ausgebildet ist, um ein von der einen oder mehreren Referenzbaken (16) erzeugtes Signal zu empfangen, und
der wenigstens eine zweite Sensor (14) wenigstens einen Magnetfeldsensor (14b) aufweist und das von der einen oder mehreren Referenzbaken (16) erzeugte Signal ein Magnetfeldsignal ist, oder
das von der einen oder mehreren Referenzbaken (16) erzeugte Signal ein hinsichtlich Feldstärke in einem Umgebungsbereich (18) der einen oder mehreren Referenzbaken (16) zeitlich und örtlich variierendes Signal ist,
wobei das System ausgebildet ist, um bei einem Passieren einer ersten Referenzbake die berechnete Position durch einen Abgleich mit einer Position der ersten Referenzbake zu korrigieren und zwischen dem Passieren der ersten Referenzbake und einem Passieren einer zweiten Referenzbake die Position des mobilen tragbaren Geräts (10) mittels des wenigstens einen ersten Sensors (12) relativ zu der korrigierten Position unter mit zunehmendem Abstand von der ersten Referenzbake vergrößernder Ungenauigkeit (20) zu berechnen, und über den zweiten Sensor zu erkennen, in welche Richtung des mobile tragbare Gerät eine jeweilige Referenzbake soeben passiert, und die Richtung zur Korrektur einer augenblicklich berechneten Lokomotionsrichtung eines Trägers des mobilen Geräts zu verwenden.

10. Verfahren zur lokalen Positionsbestimmung eines mobilen tragbaren Geräts (10) mit wenigstens einem ersten Sensor (12) zur Detektion der Bewegung des mobilen tragbaren Geräts (10), und wenigstens einem zweiten Sensor (14) zur Erkennung der Annäherung des mobilen tragbaren Geräts (10) an eine oder mehrere Referenzbaken (16), wobei das Verfahren die eine oder mehreren Referenzbaken verwendet und eine Kenntnis einer Position der einen oder mehreren Referenzbaken (16) ausnutzt, um über von dem wenigstens einen ersten Sensor (12) bereitgestellte Daten die Position des mobilen tragbaren Geräts (10) relativ zu der einen oder mehreren Referenzbaken (16) zu berechnen,
wobei der wenigstens eine zweite Sensor (14) ausgebildet ist, um ein von der einen oder mehreren Referenzbaken (16) erzeugtes Signal zu empfangen, und
der wenigstens eine zweite Sensor (14) wenigstens einen Magnetfeldsensor (14b) aufweist und das von der einen oder mehreren Referenzbaken (16) erzeugte Signal ein Magnetfeldsignal ist, oder
das von der einen oder mehreren Referenzbaken (16) erzeugte Signal ein hinsichtlich Feldstärke in einem Umgebungsbereich (18) der einen oder mehreren Referenzbaken (16) zeitlich und örtlich variierendes Signal ist,
wobei bei einem Passieren einer ersten Referenzbake die berechnete Position durch einen Abgleich mit einer Position der ersten Referenzbake korrigiert und zwischen dem Passieren der ersten Referenzbake und einem Passieren einer zweiten Referenzbake die Position des mobilen tragbaren Geräts (10) mittels des wenigstens einen ersten Sensors (12) relativ zu der korrigierten Position unter mit zunehmendem Abstand von der ersten Referenzbake vergrößernder Ungenauigkeit (20) berechnet wird, und über den zweiten Sensor erkannt wird, in welche Richtung des mobile tragbare Gerät eine jeweilige Referenzbake soeben passiert, und die Richtung zur Korrektur einer augenblicklich berechneten Lokomotionsrichtung eines Trägers des mobilen Geräts verwendet wird.

11. Computerprogramm mit einem Programmcode zur Durchführung des Verfahrens nach Anspruch 10, wenn das Programm auf einem Computer abläuft.

## Claims

1. Mobile portable device, comprising
at least one first sensor (12) for detecting a movement of the mobile portable device (10) and
at least one second sensor (14) for detecting the approximation of the mobile portable device (10) to one or several reference beacons (16),
wherein the mobile portable device (10) is implemented to calculate, by using a knowledge of a position of the one or several reference beacons (16), the position of the mobile portable device (10) relative to the one or several reference beacons (16) by means of data provided by the at least one first sensor (12),
wherein the at least one second sensor (14) is configured to receive a signal generated by the one or more reference beacons (16), and
wherein the at least one second sensor (14) comprises at least one magnetic field sensor (14b), and the signal generated by the one or more reference beacons (16) is a magnetic field signal, or
the signal generated by the one or more reference beacons (16) is a signal varying in terms of time and place with respect to its field strength in a surrounding area (18) of the one or more reference beacons (16),
wherein the mobile portable device (10) is implemented to correct, when passing a first reference beacon, the calculated position by comparison with a position of the first reference beacon and to calculate, between passing the first reference beacon and passing a second reference beacon, the position of the mobile portable device (10) by means of the at least one first sensor (12) relative to the corrected position with an inaccuracy (20) increasing with increasing distance from the first reference beacon, and to recognize, via the second sensor, in which direction the mobile portable device passes a respective reference beacon, and to use the direction for correcting a currently calculated locomotion direction of a carrier of the mobile device.

2. Mobile portable device according to claim 1, wherein the mobile portable device is implemented to use, when calculating the position between passing the first reference beacon and passing the second reference beacon, geographical circumstances (24, 24') in an electronic map (26) for reducing the inaccuracy by limitations of degrees of freedom of movement of the mobile portable device corresponding to the geographical circumstances.

3. Mobile portable device according to claim or 2 that is further implemented to also correct a motion direction of the mobile portable device (10) when passing the first reference beacon.

4. Mobile portable device according to one of the previous claims, wherein the at least one first sensor (12) comprises a position and/or acceleration sensor.

5. Mobile portable device according to one of the previous claims, wherein the at least one first sensor (12) comprises one or several gyroscopes and/or one or several accelerometers and/or one or several magnetometers and/or one or several Doppler shift detectors.

6. Mobile portable device according to one of the previous claims, wherein an electric map is stored in the mobile portable device where the position of the one or several reference beacons (16) is shown, wherein the mobile portable device is implemented to use the electric map (26) during calculation.

7. Mobile portable device according to one of the previous claims, wherein the same is implemented to identify the one or several reference beacons (16) based on information in the signal of the one or several reference beacons.

8. Mobile portable device according to one of the previous claims, wherein the mobile portable device comprises a transmission interface for communication with communication interfaces of a communication network (34) and is implemented to perform coarse localization based on the communication between transmission interface (32) and communication interfaces and to use the coarse localization for identifying the one or several reference beacons.

9. System for local positioning of a mobile portable device (10) with at least one first sensor (12) for detecting the movement of the mobile portable device (10) and at least one second sensor (14) for detecting the approximation of the mobile portable device (10) to one or several reference beacons, wherein the system includes the one or several reference beacons, and wherein the system is implemented to calculate, by using a knowledge of a position of the one of several reference beacons (16), the position of the mobile portable device (10) relative to the one or several reference beacons (16) by means of data provided by the at least one first sensor (12),
wherein the at least one second sensor (14) is configured to receive a signal generated by the one or more reference beacons (16), and
wherein the at least one second sensor (14) comprises at least one magnetic field sensor (14b), and the signal generated by the one or more reference beacons (16) is a magnetic field signal, or
the signal generated by the one or more reference beacons (16) is a signal varying in terms of time and place with respect to its field strength in a surrounding area (18) of the one or more reference beacons (16),
wherein the system is implemented to correct, when passing a first reference beacon, the calculated position by comparison with a position of the first reference beacon and to calculate, between passing the first reference beacon and passing a second reference beacon, the position of the mobile portable device (10) by means of the at least one first sensor (12) relative to the corrected position with an inaccuracy (20) increasing with increasing distance from the first reference beacon, and to recognize, via the second sensor, in which direction the mobile portable device passes a respective reference beacon, and to use the direction for correcting a currently calculated locomotion direction of a carrier of the mobile device.

10. Method for local positioning of a mobile portable device (10) with at least one first sensor (12) for detecting the movement of the mobile portable device (10) and at least one second sensor (14) for detecting the approximation of the mobile portable device (10) to one or several reference beacons (16), wherein the method uses the one or several reference beacons and uses a knowledge of a position of the one or several reference beacons (16) for calculating the position of the mobile portable device (10) relative to the one or several reference beacons (16) by means of data provided by the at least one first sensor (12),
wherein the at least one second sensor (14) is configured to receive a signal generated by the one or more reference beacons (16), and
wherein the at least one second sensor (14) comprises at least one magnetic field sensor (14b), and the signal generated by the one or more reference beacons (16) is a magnetic field signal, or
the signal generated by the one or more reference beacons (16) is a signal varying in terms of time and place with respect to its field strength in a surrounding area (18) of the one or more reference beacons (16),
wherein, during passage of a first reference beacon, the calculated position is corrected by comparison with a position of the first reference beacon, and between passing the first reference beacon and passing a second reference beacon, the position of the mobile portable device (10) is calculated by means of the at least one first sensor (12) relative to the corrected position with an inaccuracy (20) increasing with increasing distance from the first reference beacon, and it is recognized, via the second sensor, in which direction the mobile portable device passes a respective reference beacon, and the direction is used for correcting a currently calculated locomotion direction of a carrier of the mobile device.

11. Computer program having a program code for performing the method according to claim 10 when the program runs on a computer.

## Revendications

1. Appareil portable mobile avec
au moins un premier capteur (12) destiné à détecter un déplacement de l'appareil portable mobile (10), et
au moins un deuxième capteur (14) destiné à reconnaître l'approche de l'appareil portable mobile (10) à une ou plusieurs balises de référence (16),
dans lequel l'appareil portable mobile (10) est conçu pour calculer, à l'aide d'une connaissance d'une position des une ou plusieurs balises de référence (16) par l'intermédiaire de données mises à disposition par l'au moins un premier capteur (12), la position de l'appareil portable mobile (10) par rapport aux une ou plusieurs balises de référence (16),
dans lequel l'au moins un deuxième capteur (14) est conçu pour recevoir un signal généré par les une ou plusieurs balises de référence (16), et
l'au moins un deuxième capteur (14) présente au moins un capteur de champ magnétique (14b) et le signal généré par les une ou plusieurs balises de référence (16) est un signal de champ magnétique, ou
le signal généré par les une ou plusieurs balises de référence (16) est un signal variable dans le temps et localement en ce qui concerne l'intensité de champ dans une zone environnante (18) des une ou plusieurs balises de référence (16),
dans lequel l'appareil portable mobile (10) est conçu pour corriger, lors d'un passage à une première balise de référence, la position calculée par comparaison avec une position de la première balise de référence et pour calculer, entre le passage à la première balise de référence et un passage à une deuxième balise de référence, la position de l'appareil portable mobile (10) au moyen de l'au moins un premier capteur (12) par rapport à la position corrigée avec une imprécision (20) qui augmente au fur et à mesure qu'augmente la distance par rapport à la première balise de référence, et pour reconnaître, par l'intermédiaire du deuxième capteur, la direction dans laquelle l'appareil portable mobile vient de passer à une balise de référence respective, et pour utiliser la direction pour la correction d'une direction de locomotion calculée instantanément d'un porteur de l'appareil mobile.

2. Appareil portable mobile selon la revendication 1, dans lequel l'appareil portable mobile est conçu pour utiliser, lors du calcul de la position entre le passage à la première balise de référence et le passage à la deuxième balise de référence, des circonstances géographiques (24, 24') dans une carte électronique (26) pour réduire l'imprécision par des restrictions correspondant aux conditions géographiques des degrés de liberté de déplacement de l'appareil portable mobile.

3. Appareil portable mobile selon la revendication 1 ou 2, qui est par ailleurs conçu pour corriger, lors du passage à la première balise de référence, également une direction de déplacement de l'appareil portable mobile (10).

4. Appareil portable mobile selon l'une des revendications précédentes, dans lequel l'au moins un premier capteur (12) présente un capteur de position et/ou d'accélération.

5. Appareil portable mobile selon l'une des revendications précédentes, dans lequel l'au moins un premier capteur (12) présente un ou plusieurs gyroscopes et/ou un ou plusieurs accéléromètres et/ou un ou plusieurs magnétomètres et/ou un ou plusieurs détecteurs de décalage de Doppler.

6. Appareil portable mobile selon l'une des revendications précédentes, dans lequel est mémorisée, dans l'appareil portable mobile, une carte électrique dans laquelle est enregistrée la position des une ou plusieurs balises de référence (16), l'appareil portable mobile étant conçu pour utiliser la carte électrique (26) lors du calcul.

7. Appareil portable mobile selon l'une des revendications précédentes, celui-ci étant conçu pour identifier, sur base d'une information dans le signal des une ou plusieurs balises de référence, les une ou plusieurs balises de référence (16).

8. Appareil portable mobile selon l'une des revendications précédentes, l'appareil portable mobile présentant une interface de transmission pour la communication avec les interfaces de communication d'un réseau de communication (34) et est conçu pour effectuer, sur base de la communication entre l'interface de transmission (32) et les interfaces de communication, une localisation approximative et pour utiliser la localisation approximative pour l'identification des une ou plusieurs balises de référence.

9. Système de détermination de la position locale d'un appareil portable mobile (10) avec au moins un premier capteur (12) destiné à détecter le déplacement du dispositif portable mobile (10), et au moins un deuxième capteur (14) destiné à reconnaître l'approche de l'appareil portable mobile (10) à une ou plusieurs balises de référence (16), le système comportant les une ou plusieurs balises de référence, et le système étant conçu pour calculer, à l'aide d'une connaissance d'une position des une ou plusieurs balises de référence (16) par l'intermédiaire de données mises à disposition par l'au moins un premier capteur (12), la position de l'appareil portable mobile (10) par rapport aux une ou plusieurs balises de référence (16),
dans lequel l'au moins un deuxième capteur (14) est conçu pour recevoir un signal généré par les une ou plusieurs balises de référence (16), et
l'au moins un deuxième capteur (14) présente au moins un capteur de champ magnétique (14b) et le signal généré par les une ou plusieurs balises de référence (16) est un signal de champ magnétique, ou
le signal généré par les une ou plusieurs balises de référence (16) est un signal variable dans le temps et localement en ce qui concerne l'intensité de champ dans une zone environnante (18) des une ou plusieurs balises de référence (16),
dans lequel le système est conçu pour corriger, lors d'un passage à une première balise de référence, la position calculée par comparaison avec une position de la première balise de référence et pour calculer, entre le passage à la première balise de référence et un passage à une deuxième balise de référence, la position de l'appareil portable mobile (10) au moyen de l'au moins un premier capteur (12) par rapport à la position corrigée avec une imprécision (20) qui augmente au fur et à mesure qu'augmente la distance par rapport à la première balise de référence, et pour reconnaître par l'intermédiaire du deuxième capteur la direction dans laquelle l'appareil portable mobile vient de passer à une balise de référence respective et pour utiliser la direction pour la correction d'une direction de locomotion calculée instantanément d'un porteur de l'appareil mobile.

10. Procédé de détermination de la position locale d'un appareil portable mobile (10) avec au moins un premier capteur (12) destiné à détecter le déplacement de l'appareil portable mobile (10), et au moins un deuxième capteur (14) destiné à reconnaître l'approche de l'appareil portable mobile (10) à une ou plusieurs balises de référence (16), le procédé utilisant une ou plusieurs balises de référence et exploitant une connaissance d'une position d'une ou plusieurs balises de référence (16) pour calculer, par l'intermédiaire de données mises à disposition par l'au moins un premier capteur (12), la position de l'appareil portable mobile (10) par rapport aux une ou plusieurs balises de référence (16),
dans lequel l'au moins un deuxième capteur (14) est conçu pour recevoir un signal généré par les une ou plusieurs balises de référence (16), et
l'au moins un deuxième capteur (14) présente au moins un capteur de champ magnétique (14b) et le signal généré par les une ou plusieurs balises de référence (16) est un signal de champ magnétique, ou
le signal généré par les une ou plusieurs balises de référence (16) est un signal variable dans le temps et localement en ce qui concerne l'intensité de champ dans une zone environnante (18) des une ou plusieurs balises de référence (16),
dans lequel est corrigée, lors d'un passage à une première balise de référence, la position calculée par comparaison avec une position de la première balise de référence et calculée, entre le passage à la première balise de référence et un passage à une deuxième balise de référence, la position de l'appareil portable mobile (10) au moyen de l'au moins un premier capteur (12) par rapport à la position corrigée avec une imprécision (20) qui augmente au fur et à mesure qu'augmente la distance par rapport à la première balise de référence, et est reconnue, par l'intermédiaire du deuxième capteur, la direction dans laquelle l'appareil portable mobile vient de passer à une balise de référence respective et la direction est utilisée pour la correction d'une direction de locomotion calculée instantanément d'un porteur de l'appareil mobile.

11. Programme d'ordinateur avec un code de programme pour réaliser le procédé selon la revendication 10 lorsque le programme est exécuté sur un ordinateur.
